(19) Europäisches Patentamt
European Patent Office
Office européen des brevets

(11) **EP 4 318 317 A2**

(12) **EUROPÄISCHE PATENTANMELDUNG**

(43) Veröffentlichungstag:
**07.02.2024  Patentblatt 2024/06**

(21) Anmeldenummer: **23218112.3**

(22) Anmeldetag: **05.11.2020**

(51) Internationale Patentklassifikation (IPC):
**G06N 3/0464** (2023.01)

(52) Gemeinsame Patentklassifikation (CPC):
**G06N 3/063; G06N 3/0464**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2019  DE 102019129760**

(62) Dokumentnummer(n) der früheren Anmeldung(en) nach Art. 76 EPÜ:
**20810876.1 / 3 908 984**

(71) Anmelder: **EYYES GmbH**
**3494 Gedersdorf (AT)**

(72) Erfinder:
• **TRAXLER, Johannes**
**3500 Imbach (AT)**

• **WUNDERLICH, Ilkay**
**01219 Dresden (DE)**
• **SCHÖNFELD, Sven**
**01159 Dresden (DE)**

(74) Vertreter: **Torggler & Hofmann Patentanwälte - Innsbruck**
**Torggler & Hofmann Patentanwälte GmbH & Co KG**
**Wilhelm-Greil-Straße 16**
**6020 Innsbruck (AT)**

Bemerkungen:
Diese Anmeldung ist am 19-12-2023 als Teilanmeldung zu der unter INID-Code 62 erwähnten Anmeldung eingereicht worden.

(54) **LOGIKBAUSTEIN, INSBESONDERE ASIC, ZUR DURCHFÜHRUNG NEURONALER NETZWERKBERECHNUNGEN ZUM VERARBEITEN VON DATEN MITTELS EINES NEURONALEN NETZWERKS**

(57) Computerimplementiertes Verfahren zum Verarbeiten von Daten mittels eines neuronalen Netzwerks (100), wobei das neuronale Netzwerk (100) zwischen einer Inputschicht (103) und einer Outputschicht (104) eine Vielzahl von ersten Schichten (101) aufweist, wobei bevorzugt vorgesehen ist, dass jeder ersten Schicht (101) der Vielzahl von ersten Schichten (101) Filter (105) zugeordnet sind und wobei

- in jeder ersten Schicht (101) der Vielzahl von ersten Schichten (101) in einem oder mehreren Kanälen aus Eingangsdaten - vorzugsweise unter Verwendung von der jeweiligen ersten Schicht (101) der Vielzahl von ersten Schichten (101) zugeordneten Filtern (105) - durch lineare Rechenoperationen Ergebnisdaten erzeugt werden, wobei die Eingangsdaten eine Eingangsdatengröße pro Kanal aufweisen

- bevorzugt vorgesehen ist, dass für jede erste Schicht (101) der Vielzahl von ersten Schichten (101) die Größen von rezeptiven Feldern der den ersten Schichten (101) zugeordneten Filter (105) kleiner sind als die Eingangsdatengröße pro Kanal jener ersten Schicht (101) der Vielzahl von ersten Schichten (101), welcher die Filter (105) jeweils zugeordnet sind und die Filter (105) die lineare Rechenoperation jeweils an unterschiedlichen Stellen der Eingangsdaten durchführen

- in zumindest einer ersten Schicht (101) der Vielzahl von ersten Schichten (101) auf die Ergebnisdaten eine nichtlineare Aktivierungsfunktion zur Erzeugung von Ergebnisdaten in Form von Aktivierungsergebnisdaten angewandt wird, wobei

- während eines Trainings des neuronalen Netzwerks (100) in der zumindest einen ersten Schicht (101) der Vielzahl von ersten Schichten (101), vorzugsweise in allen ersten Schichten (101) der Vielzahl von ersten Schichten (101), zur Erzeugung der Aktivierungsergebnisdaten eine nichtlineare Aktivierungsfunktion mit einem ersten Bildbereich (B 1) verwendet wird

- während eines Inferenzbetriebs des neuronalen Netzwerks (100) in der zumindest einen ersten Schicht (101) der Vielzahl von ersten Schichten (101), vorzugsweise in allen ersten Schichten (101) der Vielzahl von ersten Schichten (101), zur Erzeugung der Aktivierungsergebnisdaten eine nichtlineare Aktivierungsfunktion mit einem zweiten Bildbereich (B2) verwendet wird, wobei der zweite Bildbereich (B2) eine echte Teilmenge des ersten Bildbereichs (B1) bildet.

**(Forts. nächste Seite)**

**Figur 3**

**Beschreibung**

Die im Folgenden offenbarte Erfindung betrifft in einer ersten Variante ein computerimplementiertes Verfahren zur Verarbeitung von Eingangsdaten; insbesondere in deep-learning CNN,

wobei die Eingangsdaten unter Anwendung einer Anzahl von ein Filterkriterium definierenden Filtern und unter Erstellung von Ergebnisdaten in einem Filterverfahrensschritt oder in mehreren Filterverfahrensschritten analysiert werden,
wodurch die dem Filterkriterium entsprechenden und Ergebniswerte umfassende Ergebnisdaten erstellt werden,
wobei dem zumindest einem Filter ein Wichtungsfaktor zugewiesen ist.

In von der ersten Variante unabhängigen zweiten und dritten Varianten betrifft die Erfindung ein Verfahren mit den Merkmalen des Oberbegriffs des Anspruchs 16 und/oder 23, Logikbausteine zur Durchführung solcher Verfahren, einen Logikbaustein mit den Merkmalen des Oberbegriffs des Anspruchs 26, eine Vorrichtung mit einem solchen Logikbaustein, Computerprogramme zur Durchführung der Verfahren und ein Speichermedium.

Die Eingangsdaten können beispielsweise vorgegebene oder in einer Datenbank abgespeicherte Daten sein. Die Eingangsdaten können weiters mittels eines Sensors ermittelte Daten sein. Die nachfolgende Diskussion des erfindungsgemäßen Verfahrens nach der ersten oder zweiten Variante konzentriert sich auf die Analyse von Bilddaten als vorgegebene Daten oder mittels eines Sensors ermittelbare Daten. Die Anwendung des erfindungsgemäßen Verfahrens nach der ersten, zweiten oder dritten Variante ist jedoch in keiner Weise auf die Analyse von Bilddaten beschränkt.

In gleicher Weise ist das erfindungsgemäße Verfahren nach der ersten, zweiten oder dritten Variante auch auf andere Daten anwendbar. Die Daten können sowohl dynamische, sohin zeitlich veränderliche Daten als auch statische Daten sein. Die dynamischen Daten können beispielsweise und sohin nicht einschränkend Daten sein, deren Inhalt sich nach einem bestimmten Muster oder frei verändern kann. Die gemessenen oder vorgegebenen Daten können auch Maschinendaten beschreibend die Funktionalität einer Maschine oder personenbezogene Daten beschreibend das Verhalten von Menschen sein.

Nach der gängigen Lehre können die Ergebnisdaten aus den Eingangsdaten mittels seriell angeordneter Filter oder mittels parallel angeordneter Filter erstellt werden.

Nach der ersten Variante der Erfindung können die Filterverfahrensschritte in Verfahren zum Einsatz kommen, welche nicht unbedingt ein neuronales Netzwerk erfordern. Bekannte Beispiele sind Prewitt-Filterverfahren, Wavelet-Filterverfahren oder Frame-Theory-Analysis-Verfahren. Kommt kein neuronales Netzwerk zum Einsatz, müssen die Parameter der in diesen Filterverfahren eingesetzten Filter mit bereits vorhandenem Vorwissen erstellt werden. Bei Verwendung eines neuronalen Netzwerks können die Parameter der eingesetzten Filter erlernt werden (Training des neuronalen Netzwerks mit Hilfe von Trainingsdaten).

Es ist nach dem Stand der Technik bekannt, dass in Convolutional neuronalen Netzen (CNN) die Eingangsdaten unter Anwendung von einer in Abhängigkeit von der jeweiligen Analyseaufgabenstellung variierenden Anzahl von Filtern analysiert werden, welche Filter jeweils zumindest ein Filterkriterium (auch Filterparameter genannt) aufweisen. Es sind nach dem Stand der Technik digitale Filter, mathematische Filter und analoge Filter sowie die Wirkungsweise dieser bekannt. Die eingehenden Daten werden unter Anwendung der variablen Anzahl von Filtern in zwischen einer Inputschicht und einer Outputschicht angeordneten Schichten - auch als versteckte Layer ("hidden layer", siehe WO2018112795) bezeichnet - und Erstellung von Ergebnisdaten verändert. Die Ergebnisdaten umfassen Ergebniswerte, welche Ergebniswerte dem Filterkriterium entsprechen. Die Anwendung der Filter auf die Eingangsdaten und das Erzeugen von Ergebnisdaten werden nach der gängigen Lehre mittels den Filtern zugewiesenen Wichtungsfaktoren gewichtet. Das Wesen und die Funktionalität von CNN ist beispielsweise in dem Online-Lexikon Wikipedia und weiter unten in der vorliegenden Offenbarung beschrieben.

Bei Verfahren nach dem Stand der Technik werden auch bei Verwendung eines neuronalen Netzwerks weitere Rechenprogramme benötigt, um diejenigen Filter mit einem nicht relevanten Filterkriterium und/oder ohne relevanten Einfluss auf das Endergebnis zu erkennen und aus dem anzuwendenden Verfahren nach dem Stand der Technik zu löschen. Das Erkennen dieser nicht relevanten Filter erfolgt während des Vorganges des Anlernens des CNN, wobei das erfolgte Löschen als solches nicht umkehrbar ist, sondern ein erneutes Anlernen des CNN zur Wiedereinführung der zuvor gelöschten Filter erforderlich ist. Der Fachmann erkennt, dass das Erkennen von nicht benötigten Filtern und das Einstufen dieser Filter als nicht relevante Filter eine Rechenleistung erfordert. Der Fachmann kennt "Pruning" oder "Spiking" als beispielhafte Ansätze.

Der Umstand, dass als nicht relevant eingestufte Filter aus dem anzuwendenden Verfahren gelöscht werden, macht die Verfahren nach dem Stand der Technik starr und nicht weiter anpassbar. Es wird dem CNN die mögliche günstige Eigenschaft genommen, im Betrieb des CNN (sogenannter Inferenzbetrieb) ein weiteres Lernen unter Einsatz von weiteren Filtern mit weiteren Filtereigenschaften durchzuführen, welche weiteren Filter mit weiteren Filtereigenschaften unter Anwendung der gängigen Lehre während des zuvor erfolgten Vorganges des Anlernens des CNN als irrelevant eingestuft wurden und gelöscht wurden.

EP3480746 basiert auf einem Zusammenhang zwischen einer Erkennung eines Filters und der Zuweisung der Wichtungsfaktoren. Es findet sich in EP3480746 kein Hinweis auf eine gleichbleibende Anzahl von sequentiell angeordneten Filtern oder zueinander parallel ablaufenden Filterverfahrensschritten.

WO2019074804A1 liefert keinen Hinweis auf eine definierte Anzahl von Filtern.

In US201900887725 wird die Anzahl der Filter in Abhängigkeit der Achsen eines mehrdimensionalen Farbraumes gewählt. US201900887725 offenbart nicht die Anwendung von Wichtungsfaktoren zur Wichtung des Einflusses der Filter auf die Ergebnisdaten.

US20190080507 erwähnt in [0013] die Definition der Anzahl der Filter in Abhängigkeit der Achsen des mehrdimensionalen Farbraumes. Es findet sich in US20190080507 jedoch kein Hinweis auf die Verwendung von Wichtungsfaktoren zur Bewertung von Eigenschaften. Selbst bei einer Wiederholung des in US20190080507 offenbarten Verfahrens bei einer konstanten Anzahl von Achsen im mehrdimensionalen Farbraum und bei einer folglich konstanten Anzahl von Filtern unterscheidet sich das in US20190080507 offenbarte Verfahren um das Merkmal der Wichtungsfaktoren, mittels welcher Wichtungsfaktoren der Einfluss der Filter auf die Ergebnisdaten in jedem Verfahrensschritt steuerbar ist. Bei einer Wiederholung des in US20190080507 offenbarten Verfahrens würde dieses Verfahren in jedem Verfahrensschritt die gleichen Ergebnisdaten liefern.

WO2018106805A1 liefert keinen Hinweis auf eine zwischen den Verfahrensschritten gleichbleibende Anzahl von Filtern.

WO2017152990 widerspricht dem Grundgedanken des unten offenbarten erfindungsgemäßen Verfahrens aufweisend eine statische Anzahl von Filtern, indem eine Reduktion der Multiplikationsoperationen durch eine Reduktion der Layer angestrebt wird (Seite 6-7).

US6389408 erwähnt zur Erkennung von biologischen und chemischen Materialien eine Müller Matrix. Dies ist kein Hinweis auf eine konstante Anzahl von sequentiell angeordneten Filtern oder zueinander parallel ablaufenden Filterverfahrensschritten.

Der Lösungsansatz von EP0566015A2 umfasst keine statische Anzahl von sequentiell angeordneten Filtern oder keine zueinander parallel ablaufende Filterverfahrensschritte.

Es findet sich in EP1039415 kein Hinweis auf eine statische Anzahl von sequentiell angeordneten Filtern oder eine statische Anzahl von zueinander parallel ablaufenden Filterverfahrensschritten.

Es ist US20180137414 US20180137417 als Dokument nach dem Stand der Technik bekannt. In US20180137414[0044] ist definiert, dass ein deep-learning CNN mindestens drei Layer oder Filter zur Verarbeitung von Eingangsdaten umfasst. US20180137414 US20180137417 beschreibt lediglich die sequentielle Schaltung der Filter. US20180137414 liefert keinen Hinweis auf eine gleichbleibende Anzahl von Filtern bei einer Wiederholung des Verfahrens. Darüber hinaus konzentriert sich diese Anmeldung auf die Optimierung durch eingangsdatenabhängige Vermeidung von Filteroperationen mittels LKAM und nicht auf die parallelisierte Verarbeitung von Eingangsdaten für einen gesamten Layer.

Analyseverfahren nach der gängigen Lehre werden als computerimplementierte Verfahren ausgeführt. Bei einer Analyse von Eingangsdaten in neuronalen Netzen unter Anwendung von Verfahren nach dem Stand der Technik werden die Eingangsdaten mittels einer Anzahl von Filtern unter der Erstellung von Ergebnisdaten (auch Ausgangsdaten genannt) in mehreren Filterverfahrensschritten analysiert. Die Ergebnisdaten umfassen Ergebniswerte und Antwortwerte.

Derartige Analyseverfahren sind nach dem Stand der Technik durch eine schwankende Anzahl von Filtern zwischen den Filterverfahrensschritten geprägt. Dies ist insbesondere bei der Dimensionierung von den Rechenprozessoren der Computer nachteilig, da es bei der Anzahl der Filter eine über die Verfahrensschritte veränderliche Größe handelt. Derartige Rechenprozessoren sind nicht als ASIC-Bausteine, sondern nur durch allgemeine Prozessoreinheiten mit sequenzieller Abarbeitung der Operationen mit einer hinreichend dimensionierten Anzahl von Eingängen und Ausgängen realisierbar.

Das erfindungsgemäße Verfahren nach der ersten, zweiten und dritten Variante stellt sich insbesondere die Aufgabe, das Verfahren der Analyse von Daten mittels neuronaler Netze so zu gestalten, dass diese durch Rechenprozessoren umfassend ASIC-Bausteine (ASIC steht für anwendungsspezifische Schaltung, engl. application-specific integrated circuit) unter Ausnutzung der vorteilhaften Eigenschaften dieser Bausteine bewältigbar ist.

Das erfindungsgemäße Verfahren nach der ersten, zweiten und dritten Variante stellt sich weiters insbesondere die Aufgabe, dynamische Daten in Echtzeit in einer effizienten Weise zu verarbeiten.

Logikbausteine in Form von ASIC-Bausteinen zeichnen sich dadurch aus, dass die Funktion eines ASIC nach dessen Herstellung nicht mehr veränderbar ist, weshalb die Herstellungskosten von ASIC-Bausteinen in der Regel bei hohen Einmalkosten für die Entwicklung gering sind. ASIC-Bausteine werden nach Kundenanforderungen mit definierten festen Verschaltungen erstellt und normalerweise nur an diese ausgeliefert.

Alternative Logikbausteine werden engl. free programmable gate array, kurz FPGA genannt, welche FPGA jedoch wesentlich kostspieliger sind und daher für hohe Stückzahlen von Komponenten ungeeignet sind. FPGA-Bausteine sind frei programmierbar.

Erfindungsgemäß wird dies durch das erfindungsgemäße Verfahren nach der ersten und/oder der zweiten und/oder der dritten Variante erreicht.

Das erfindungsgemäße Verfahren nach der ersten Variante zeichnet sich dadurch aus, dass die Anzahl der Filter in den Verfahrensschritten konstant ist.

Das erfindungsgemäße Verfahren nach der ersten Variante zeichnet sich sohin durch eine statische Anzahl von Filtern in jedem Verfahrensschritt aus. Die Anzahl der Filter ist bei der Durchführung eines Filterverfahrensschrittes gleich der Anzahl der in einem vorhergegangenen Filterverfahrensschritt angewandten Filter.

Das erfindungsgemäße Verfahren nach der ersten Variante stellt sohin eine Vereinfachung im Vergleich zu den oben erwähnten Verfahren nach der gängigen Lehre dar, da der Vorgang des Erkennens und des Einstufens der nicht relevanten Filter entfällt. Die starre Anzahl der Filter hat weiters den Vorteil, dass die starre Anzahl der Filter eine konstante Größe darstellt. Es ist die Dauer der Rechenprozesse nicht von einer variablen Anzahl der Filter, sondern von der konstanten Anzahl der Filter abhängig und sohin planbar.

Das erfindungsgemäße Verfahren nach der ersten, zweiten und dritten Variante ist mittels Rechenprozessoren durchführbar. Das erfindungsgemäße Verfahren nach der ersten, zweiten und dritten Variante ist insbesondere mittels Rechenprozessoren umfassend ASIC-Bausteine durchführbar.

Die starre Anzahl der Filter hat weiters den Vorteil, dass das erfindungsgemäße Verfahren nach der ersten und/oder der zweiten Variante wegen der Verfügbarkeit aller Filter durch die während des Anlernens des CNN als nicht relevant eingestuften weiteren Filter erweiterbar, was im Folgenden unter Verweis auf eine besondere Ausformung des erfindungsgemäßen Verfahrens nach der ersten und/oder der zweiten Variante erläutert wird. Das erfindungsgemäße Verfahren nach der ersten und/oder der zweiten Variante ist sohin im Vergleich zu den Verfahren nach dem Stand der Technik besser an eine sich verändernde Situation anpassbar.

Das hier diskutierte Verfahren nach der ersten Variante kann mittels sequentiell angeordneter Filter ausgeführt werden, wobei die einzelnen Filterverfahrensschritte sequentiell ablaufen. Das erfindungsgemäße Verfahren nach der ersten Variante zeichnet sich wegen der konstanten Anzahl der Filter dadurch aus, dass die Anzahl der Filter bei der Durchführung eines Filterverfahrensschrittes gleich der Anzahl der in einem vorhergegangenen Filterverfahrensschritt angewandten Filter ist.

Es können die einzelnen Filterverfahrensschritte unter Abspeichern eines Ergebnisses der einzelnen Filterverfahrensschritte mit einem Rechenprozessor durchgeführt werden. Es können auch die einzelnen Filterverfahrensschritte mit jeweils einem einzelnen Rechenprozessor durchgeführt werden.

Das hier offenbarte Verfahren kann mittels parallel angeordneter Filter ausgeführt werden, wobei die einzelnen Filterverfahrensschritte parallel ablaufen. Die einzelnen Filterverfahrensschritte können wiederum mittels eines Rechenprozessors durchgeführt werden. Es kann auch jeder einzelne Filterverfahrensschritt durch einzelne Rechenprozessoren ausgeführt werden.

Die oben verwendeten Begriffe "sequentiell" und "parallel" können eine zeitliche Anordnung und eine räumliche Anordnung betreffen.

Es ist die Kombination einer sequentiellen Anordnung und einer parallelen Anordnung der Filter möglich.

Das erfindungsgemäße Verfahren nach der ersten und/oder der zweiten Variante zeichnet sich dadurch aus, dass wegen der über die Anzahl der Verfahrensschritte konstanten Anzahl der Filter der zu der Durchführung des erfindungsgemäßen Verfahrens nach der ersten und/oder der zweiten Variante erforderliche Rechenaufwand wie beispielsweise CPU-Auslastung, Speicherbedarf in den einzelnen Verfahrensschritten normierbar ist. Der über die einzelnen Verfahrensschritte erforderliche Rechenaufwand ist durch eine mathematische Funktion beschreibbar. Der Rechenaufwand kann insbesondere über die einzelnen Verfahrensschritte konstant sein. Diese Normierbarkeit der Verfahrensschritte und/oder die Möglichkeit der Beschreibung des Rechenaufwandes mittels einer mathematischen Funktion hat darüber hinaus den Effekt, dass Störungen in einer Vorrichtung zur Durchführung des erfindungsgemäßen Verfahrens nach der ersten und/oder der zweiten Variante leicht erkennbar sind.

Das erfindungsgemäße Verfahren nach der ersten und/oder der zweiten und/oder der dritten Variante kann sich dadurch auszeichnen, dass ein Wichtungsfaktor Null beträgt, wobei ein Wichtungsfaktor in einer nach dem Stand der Technik bekannten Form vorliegen kann. Das erfindungsgemäße Verfahren nach der ersten und/oder der zweiten und/oder der dritten Variante basiert nicht auf einer Neudefinition der Wichtungsfaktoren.

Der Wichtungsfaktor ist mit dem jeweiligen Filter derart verknüpft, dass bei einem Wichtungsfaktor gleich Null das unter Anwendung des jeweiligen Filters ermittelte Ergebnis ebenso Null ist. Derjenige Filter, welchem Filter ein Wichtungsfaktor gleich Null zugewiesen ist, hat sohin keinen Einfluss auf die Ergebnisdaten, welche Ergebnisdaten unter Anwendung mehrerer Filter erstellt werden.

Der einem Filter zugewiesene Wichtungsfaktor kann mit dem Filter durch eine mathematische Operation oder durch eine Logik verknüpft sein. Die mathematische Operation kann beispielsweise eine Multiplikation von Filterkriterium und Wichtungsfaktor sein, sodass bei einer Multiplikation von Filterkriterium und einem Wichtungsfaktor gleich Null das unter Anwendung dieses Filters ermittelbare Ergebnis Null ist.

Das erfindungsgemäße Verfahren nach der ersten und/oder der zweiten und/oder der dritten Variante zeichnet sich allenfalls dadurch aus, dass in schalttechnischer Hinsicht stets alle Filter vorhanden sind. Es wird lediglich der Einfluss der Filter über die Wichtungsfaktoren gesteuert.

Im Unterschied zu Verfahren nach der gängigen Lehre basiert das erfindungsgemäße Verfahren nach der ersten und/oder der zweiten und/oder der dritten Variante auf einer starren Struktur und ist hierdurch wiederholbar. Das erfindungsgemäße Verfahren nach der ersten und/oder der zweiten und/oder der dritten Variante ist auf einem Mikrochip mit starren und sohin unveränderlichen Eigenschaften ausführbar.

Der Wichtungsfaktor kann unter Verweis auf die gängige Lehre ungleich Null sein. Ein Wichtungsfaktor ungleich Null hat unter Verweis auf die nachstehenden Bestimmungen der Genauigkeit einen Einfluss auf das Ergebnis haben.

Der Wichtungsfaktor kann unter Verweis auf die gängige Lehre Eins betragen.

Durch die Festlegung eines Wichtungsfaktors ungleich Null kann in Analogie zu der gängigen Lehre der Einfluss des jeweiligen Filters auf die Ergebnisdaten definiert werden.

Durch die Festlegung eines Wichtungsfaktors gleich Eins oder einem Wert nahezu Eins kann der Einfluss des jeweiligen Filters alleine oder im Vergleich zu weiteren Wichtungsfaktoren auf die Ergebnisdaten unskaliert beziehungsweise nahezu unskaliert verbleiben.

Die Erfindung kann auch umfassen, dass ein Wichtungsfaktor einen Wert nahe Null aufweist und sohin derjenige Filter nahezu keinen Einfluss auf die Ergebnisdaten aufweist. Der Fachmann kann unter Tolerierung eines Fehlers die denjenigen Filter zugewiesenen Wichtungsfaktoren, welche Filter keinen Einfluss auf die Ergebnisdaten haben sollen, nahe und somit ungleich Null setzen. Der hierdurch entstehende Fehler ist durch Verfahren nach dem Stand der Technik ermittelbar und reduzierbar.

Gegebenenfalls sind die eingangs angeführten Methoden nach dem Stand der Technik zur Bewertung eines Einflusses eines Filters auf das Ergebnis sinngemäß anzuwenden.

Das erfindungsgemäße Verfahren nach der ersten und/oder der zweiten und/oder der dritten Variante kann den Einsatz von Filtern bei der Analyse von Daten vorsehen. Nach der gängigen Lehre bedingt die Analyse von Daten den vorhergegangenen Prozess des Anlernens des CNN einschließlich der Bestimmung von diesen Filtern und/oder von Wichtungsfaktoren, welche Wichtungsfaktoren mit den Filtern verbunden sind.

Das erfindungsgemäße Verfahren nach der ersten und/oder der zweiten und/oder der dritten Variante kann sich dadurch auszeichnen, dass diese Filter mit Filtereigenschaften, welche Filter während des Vorganges des Anlernens des CNN einen nicht relevanten Einfluss auf die Ergebnisdaten haben, einen Wichtungsfaktor Null oder nahezu Null erhalten. Diese Filter können bei einer möglichen Ausführungsform des erfindungsgemäßen Verfahrens nach der ersten und/oder der zweiten Variante während des Vorganges des Anlernens nicht gelöscht werden.

Das erfindungsgemäße Verfahren nach der ersten und/oder der zweiten und/oder der dritten Variante kann sich dadurch auszeichnen, dass bei einer Verwendung des erfindungsgemäßen Verfahrens nach der ersten und/oder der zweiten und/oder der dritten Variante der Einfluss der Filter auf das Endergebnis weiter überprüft wird.

Eine solche Überprüfung kann die Folge haben, dass ein Filter, welcher Filter beim Anlernen als für die Ergebnisdaten als nicht relevant eingestuft wird und mit einem Wichtungsfaktor gleich Null versehen wird, nach obiger Überprüfung mit einem Wichtungsfaktor ungleich Null versehen wird. Ebenso kann eine solche Überprüfung die Folge haben, dass ein Filter, welcher Filter beim Anlernen als relevant eingestuft wird und mit einem Wichtungsfaktor ungleich Null versehen wird, nach obiger Überprüfung mit einem Wichtungsfaktor gleich Null versehen wird. Diese Anpassungsvorgänge sind im Gegensatz zu den Verfahren nach dem Stand der Technik, welche Verfahren nach dem Stand der Technik ausschließlich das Löschen eines Filters gestatten, umkehrbar. Gegebenenfalls werden diese Anpassungsvorgänge nur nach erfolgter Überprüfung durch einen Fachmann durchgeführt.

In Ergänzung zu der erwähnten Analyse von Eingangsdaten ist auch eine mögliche Anwendung des erfindungsgemäßen Verfahrens nach der ersten und/oder der zweiten und/oder der dritten Variante, in einer sehr effizienten Weise den Einfluss eines Filters oder den Einfluss mehrerer Filter zu ermitteln. Diese Überprüfung kann derart ausgeführt werden, dass ausgewählte Wichtungsfaktoren aus einer Vielzahl von Filtern gleich Null oder nahezu Null gesetzt werden. Umfasst ein ASCI-Prozessor als Recheneinheit zur vorteilhaften Durchführung des erfindungsgemäßen Verfahren nach der ersten und/oder der zweiten Variante beispielsweise $2^n$ (n=1,2,3... ; zum Beispiel acht mit n=3) Filter mit $2^n$ den Filtern zugewiesenen Wichtungsfaktoren, so kann durch das Setzen von $2^n$ Wichtungsfaktoren gleich Null der Einfluss dieser Filter auf das Endergebnis ermittelt werden. In einem iterativen Verfahren kann sohin der Einfluss der Filter aus einer Vielzahl von Filtern - hier beispielsweise acht Filter - in einer sehr effizienten Art und Weise überprüft werden. Das erfindungsgemäße Verfahren nach der ersten und/oder der zweiten und/oder der dritten Variante kann sich dadurch auszeichnen, dass eine Anzahl von 2n Filtern aus einer Vielzahl von Filtern ermittelt wird, welche Anzahl von 2n Filtern keinen wesentlichen Einfluss auf den Ergebniswert hat. Im Gegensatz zu dem erfindungsgemäßen Verfahren nach der ersten und/oder der zweiten und/oder der dritten Variante basiert das oben erwähnte Verfahren zur Ermittlung einer optimalen Anzahl von Filtern (dem Fachmann z.B. als "Pruning" oder "Spiking" bekannt), auf den Ergebniswert keinen wesentlichen Einfluss aufweisenden Filtern. Das erfindungsgemäße Verfahren nach der ersten Variante ist sohin eine Weiterentwicklung der bekannten Verfahren (beispielsweise "Pruning" oder "Spiking").

Das erfindungsgemäße Verfahren nach der ersten und/oder der zweiten und/oder der dritten Variante zeichnet sich dadurch aus, dass eine Analyse von eingehenden Daten unter Anwendung des erfindungsgemäßen Verfahrens nach der ersten und/oder der zweiten und/oder der dritten Variante und eine Überprüfung des Einflusses von Filtern auf das Endergebnis wegen der konstanten Anzahl $2^n$ der Filter ähnliche, voneinander unabhängig durchführbare Verfahren sind.

Das erfindungsgemäße Verfahren nach der ersten und/oder der zweiten und/oder der dritten Variante kann den Schritt umfassen, dass $2^n$ Filter aus der Vielzahl der Filter gelöscht werden. Werden alle der $2^n$ Filter gelöscht, so wird diese Anzahl an Filtern inaktiv für das erfindungsgemäße Verfahren gestellt. Die Anzahl der zu löschenden Filter kann kleinergleich als die numerische Anzahl der Vielzahl der Filter sein. Dies erlaubt die Verwendung von Rechenheiten umfassend einen ASIC-Baustein mit einer vorgegebenen Recheneinheitarchitektur.

Es können der Wichtungsfaktor nahezu gleiche Werte wie beispielsweise Eins aufweisen. Unter Verweis auf die gängige Lehre wird eine Wichtung der Filter dadurch erreicht, dass der Wichtungsfaktor derart unterschiedliche Werte aufweisen, sodass durch die unterschiedlichen Wichtungsfaktoren Einfluss auf die Ergebnisdaten genommen wird.

Es ist im Grunde eine Anforderung an die Genauigkeit an das erfindungsgemäße Verfahren nach der ersten und/oder der zweiten und/oder der dritten Variante, ob ein Wichtungsfaktor mit einem Wert nahezu Null und somit ein Wichtungswert mit einem um einen Abstandswert von Null unterschiedlichen Wert die an das erfindungsgemäße Verfahren nach der ersten und/oder der zweiten und/oder der dritten Variante gestellte Erfordernis der Genauigkeit erfüllt. In Abhängigkeit von der definierten Anforderung der Genauigkeit ist der Abstandswert definierbar. Es kann der Abstandswert nicht nur in Bezugnahme auf Zahlengrenzen, sondern in Hinblick auf die geforderte Genauigkeit festgelegt werden. Dies ist auch auf einen Wichtungswert nahezu Eins oder nahezu einem anderen Wert anzuwenden.

Das erfindungsgemäße Verfahren nach der ersten und/oder der zweiten und/oder der dritten Variante zeichnet sich allenfalls dadurch aus, dass in schalttechnischer Hinsicht stets alle Filter vorhanden sind. Im Unterschied zu Verfahren nach der gängigen Lehre basiert das erfindungsgemäße Verfahren nach der ersten und/oder der zweiten und/oder der dritten Variante auf einer starren Struktur. Das erfindungsgemäße Verfahren nach der ersten und/oder der zweiten und/oder der dritten Variante ist auf einem Mikrochip mit starren und sohin unveränderlichen Eigenschaften ausführbar.

Das erfindungsgemäße Verfahren nach der ersten und/oder der zweiten und/oder der dritten Variante basiert auf dem oben beschriebenen Grundgedanken, dass in schalttechnischer Sicht alle Filter vorhanden sind. Unter Verweis auf die gängige Lehre kann ein Filter eine geringe Relevanz auf die Ergebnisdaten haben. Bei Verfahren nach dem Stand der Technik werden diese Filter mit einer geringen Relevanz auf die Ergebnisdaten gelöscht, während beim erfindungsgemäßen Verfahren diese Filter aktiv bleiben und gegebenenfalls mit einem Wichtungsfaktor Null oder nahezu Null zugewiesen wird.

Das erfindungsgemäße Verfahren nach der ersten und/oder der zweiten und/oder der dritten Variante kann sich dadurch auszeichnen, dass das Filterkriterium eines ausgewählten Filters veränderlich ist. Das erfindungsgemäße Verfahren nach der ersten und/oder der zweiten und/oder der dritten Variante kann Routinen ("Pruning") umfassen, mittels welcher Routinen die geringe Relevanz eines Filters ermittelt wird und das Filterkriterium in iterativen Verfahrensschritten so abgeändert wird, dass dieser Filter ein Filterkriterium mit einer Relevanz auf die Ergebnisdaten umfasst. Die Relevanz eines Filters auf die Ergebnisdaten ist unter Anwendung von mathematischen Methoden nach der gängigen Lehre ermittelbar.

Das erfindungsgemäße Verfahren nach der ersten und/oder der zweiten und/oder der dritten Variante kann sich dadurch auszeichnen, dass das Filterkriterium Filterparameter umfasst, welche Filterparameter veränderlich ist. Ein Filterparameter ist ein Wert eines Filterkriteriums, welcher Wert so abgeändert werden kann, dass der Filter eine Relevanz auf die Ergebnisdaten aufweist.

Der Filterparameter kann beispielsweise bei der Analyse von Farben ein RGB-Wert oder ein eine Farbe beschreibender Wert sein. Weist ein Filter einen RGB-Wert auf, welcher RGB-Wert keine Relevanz auf die Ergebnisdaten hat, kann dem Filterparameter ein anderer Wert zugewiesen werden.

Die oben beschriebene Veränderung eines Filterparameters stellt eine Alternative zu dem nach dem Stand der Technik bekannten Löschen von auf die Ergebniswerte keinen wesentlichen Einfluss aufweisenden Filtern dar. Ein derartiges Verfahren ist - wie schon eingangs als Stand der Technik erwähnt - unter dem Fachbegriff "Pruning" bekannt. Das erfindungsgemäße Verfahren nach der ersten und/oder der zweiten und/oder der dritten Variante kann um ein "Pruning"-Verfahren nach der gängigen Lehre ergänzt werden, nach welchem Verfahren Filter mit keinem wesentlichen Einfluss auf die Ergebniswerte gelöscht werden. In Abhängigkeit von der definierten Verknüpfung der einzelnen Filterverfahrensschritte kann eine Anzahl von Filtern gelöscht werden.

Das erfindungsgemäße Verfahren nach der ersten und/oder der zweiten und/oder der dritten Variante eignet sich insbesondere als ein Verfahren zur Analyse von Daten in neuronalen Netzen.

Das erfindungsgemäße Verfahren nach der ersten und/oder der zweiten und/oder der dritten Variante kann im Rahmen einer Verarbeitung von Daten mittels neuronaler Netze um weitere Verfahrensschritte ergänzt werden. Es können die Ergebniswerte in zumindest einem weiteren Verfahrensschritt aus der Gruppe der weiteren Verfahrensschritte unter Erstellung von weiteren Ergebniswerten verarbeitet werden:

- Aufsummierung,
- Entzerrung,
- Rektifizierung,
- Pooling.

Die weiteren Verfahrensschritte sind nach der gängigen Lehre bekannt.

Die hier offenbarte Erfindung betrifft auch eine Vorrichtung zur Datenverarbeitung umfassend Mittel zur Ausführung des im obigen allgemeinen Beschreibungsteil und unten in der Figurenbeschreibung beschriebenen Verfahrens.

Die hier offenbarte Erfindung erlaubt die Durchführung der Verarbeitung von Daten mittels eines Rechenprozessors mit einem ASCI-Bauteil und/oder einem FPGA-Bauteil.

Die hier offenbarte Erfindung betrifft auch ein Computerprodukt umfassend Befehle, welche Befehle bei der Ausführung eines Computerprogramms durch einen Computer diesen oder einen Computer veranlassen, das erfindungsgemäße Verfahren nach der ersten und/oder der zweiten und/oder der dritten Variante auszuführen.

Die hier offenbarte Erfindung betrifft auch ein computerlesbares Speichermedium umfassend Befehle, welche Befehle bei der Ausführung durch einen Computer diesen oder einen Computer veranlassen, das erfindungsgemäße Verfahren nach der ersten und/oder der zweiten und/oder der dritten Variante auszuführen.

Die hier offenbarte Erfindung betrifft neben dem oben im allgemeinen Beschreibungsteil und im unten anhand von Ausführungsbeispielen beschriebenen Verfahren auch eine Vorrichtung zur Durchführung des erfindungsgemäßen Verfahrens nach der ersten und/oder der zweiten und/oder der dritten Variante, ein Computerprogramm umfassend Befehle zur Ausführung des erfindungsgemäßen Verfahrens nach der ersten und/oder der zweiten und/oder der dritten Variante sowie einen Datenträger, auf welchem Datenträger ein Computerprogramm zur Ausführung des erfindungsgemäßen Verfahrens nach der ersten und/oder der zweiten Variante gespeichert ist.

In der von der ersten Variante unabhängigen, zweiten Variante betrifft die Erfindung ein Verfahren mit den Merkmalen des Oberbegriffs des Anspruchs 16, Logikbausteine zur Durchführung eines solchen Verfahrens, einen Logikbaustein mit den Merkmalen des Oberbegriffs des Anspruchs 30, eine Vorrichtung mit einem solchen Logikbaustein, Computerprogramme zur Durchführung des Verfahrens und ein Speichermedium.

Die nachstehenden Ausführungen gelten auch für die Erfindung und können daher Ausführungsbeispiele der ersten und/oder der zweiten und/oder der dritten Variante der Erfindung darstellen.

Neuronale Netze sind Modelle des maschinellen Lernens, die nach einer geeigneten Konfiguration (welche durch ein Trainingsverfahren erfolgt, auch als Lernen bezeichnet) mittels einer Vielzahl von in rechentechnisch betrachtet sequenziell und/oder parallel angeordneten Schichten aus einem Input von Daten einen Output erzeugen, z. B. um eine Klassifizierung durchzuführen. Der Vorgang der Datenverarbeitung mittels eines konfigurierten (also trainierten) neuronalen Netzwerkes wird als Inferenz bezeichnet.

Sogenannte tiefe neuronale Netzwerke weisen zwischen einer Inputschicht und einer Outputschicht eine Vielzahl von Schichten (wenigstens zwei Schichten, meist aber mehr als zwei Schichten) auf, in welchen jeweils aus Eingangsdaten (die eine Eingangsdatengröße aufweisen, welche üblicherweise von Schicht zu Schicht verschieden ist) mittels einer Anzahl von jeweils einer Schicht zugeordneten Filtern durch lineare Rechenoperationen eine Anzahl von Ergebnisdaten erzeugt wird. Die Ergebnisdaten der einen Schicht fungieren im Fall von rechentechnisch betrachtet sequenziell angeordneten Schichten als Eingangsdaten der unmittelbar darauffolgenden Schicht (wobei zumindest in Bezug auf ausgewählte Schichten, bevorzugt in Bezug auf alle Schichten) ggf. weitere Rechenoperationen auf die Ergebnisdaten angewandt werden, bevor sie der darauffolgenden Schicht als Eingangsdaten zugeführt werden, wie die Anwendung einer nichtlinearen Aktivierungsfunktion - z. B. ReLU oder eine andere geeignete nichtlineare Aktivierungsfunktion - und/oder eines Pooling- und/oder Downsampling-Verfahrens. Die Anwendung einer nichtlinearen Aktivierungsfunktion wird auch als Rektifiziervorgang bezeichnet.

Tiefe neuronale Netzwerke, bei welchen mittels einer Vielzahl von Schichten jeweils aus Eingangsdaten unter Verwendung einer Anzahl von jeweils einer Schicht zugeordneten Filtern durch lineare Rechenoperationen eine Anzahl von Ergebnisdaten erzeugt wird, wobei Filtergrößen der einer ersten Schicht zugeordneten Filter kleiner sind als die Eingangsdatengröße und die Filter die lineare Rechenoperation jeweils an unterschiedlichen Stellen der Eingangsdaten durchführen (solche Schichten werden in der vorliegenden Offenbarung im Folgenden als erste Schichten bezeichnet), werden als Convolutional Neuronal Networks (CNN) bezeichnet, wenn als lineare Rechenoperation ein inneres Produkt zum Einsatz kommt, sodass nach der mehrmaligen Anwendung eines Filters eine Faltung vorliegt.

Vor der Outputschicht des neuronalen Netzwerks kommen häufig wenigstens zwei Schichten zum Einsatz, die dicht miteinander verbunden sind, d. h. bei denen jedes Element (Neuron) einer vorigen Schicht mit jedem Element (Neuron) der unmittelbar nachfolgenden Schicht verbunden ist (sogenannte voll verbundene Schichten). Um diese Schichten von den eingangs besprochenen ersten Schichten zu unterscheiden, werden ggf. vorhandene dicht miteinander verbundene Schichten in der vorliegenden Offenbarung als zweite Schichten bezeichnet. Es kann auch vorgesehen sein, dass eine der wenigstens zwei zweiten Schichten die Outputschicht bildet.

Die einer Inputschicht eines neuronalen Netzwerks zugeführten Eingangsdaten sind gitterartig anordenbar, wobei die Gitter mit unterschiedlichen Dimensionen und unterschiedlich vielen Kanälen (engl. Datachannel oder Channel) vorliegen können, wie nachstehende Beispiele zeigen:

- 1D-Gitter in 1 Kanal: Eingangsdaten in Form von Audiosignalen, wobei die Amplitude entlang diskreter Zeitschritte darstellbar ist
- 2D-Gitter in 1 Kanal: Eingangsdaten in Form von monochromen Bildsignalen, wobei entlang einer Höhe und einer Breite das Bildsignal repräsentierende Graustufen-Pixel darstellbar sind
- 2D-Gitter in 3 Kanälen: Eingangsdaten in Form von Farbbildsignalen, wobei pro Kanal die Intensität einer der Farben Rot, Grün und Blau in Pixeln darstellbar ist, welche entlang einer Höhe und einer Breite anordenbar sind
- 3D-Gitter in 1 Kanal: Eingangsdaten in Form von volumetrischen Daten, z. B. medizinische Bildgebung
- 3D-Gitter in 3 Kanälen: Eingangsdaten in Form von Farbvideodaten, wobei pro Kanal die Intensität einer der Farben Rot, Grün und Blau in Pixeln darstellbar ist, welche entlang einer Höhe und einer Breite anordenbar sind, wobei eine zusätzliche Achse die Zeit darstellt

Die Eingangsdatengröße hängt von der Anzahl der in Bezug auf die vorliegenden Gitter-Dimensionen und Kanälen vorliegenden Menge an Eingangsdaten ab und beträgt beispielsweise für Eingangsdaten, welche in 2D mit $p \cdot q$ Einträgen und $k$ Kanälen vorliegen, $p \cdot q \cdot k$. Pro Kanal beträgt die Eingangsdatengröße $p \cdot q$. Es sei angemerkt, dass für ein- und dasselbe neuronale Netzwerk durch die Verwendung von Filtern Eingangsdaten mit unterschiedlichen Eingangsdatengrößen verwendbar sind. Die Anzahl an Kanälen wird manchmal auch als Tiefe bezeichnet (nicht zu verwechseln mit der Tiefe eines neuronalen Netzwerks, d. h. der Anzahl an sequenziell angeordneten Schichten), sodass man davon sprechen kann, dass die Eingangsdaten im Format Höhe · Breite · Tiefe vorliegen.

Ein einzelner Filter (engl. oft auch als Kernel bezeichnet) weist stets dieselbe Anzahl an Kanälen auf wie jene Eingangsdaten, auf welche er anzuwenden ist, und meist auch dieselbe Anzahl an Dimensionen, sodass im Falle von 2D Eingangsdaten meist ein 2D Filter zum Einsatz kommt (die Übereinstimmung in der Anzahl der Dimensionen ist allerdings nicht unbedingt erforderlich, beispielsweise könnte im Falle von 2D Eingangsdaten alternativ ein 1D Filter zum Einsatz kommen). Die Filtergröße pro Kanal (auch - in Bezug auf jene erste Schicht, welcher der Filter zugeordnet ist - als Größe des rezeptiven Feldes bezeichnet) ist kleiner als die Eingangsdatengröße pro Kanal, üblicherweise wesentlich kleiner (eine oder mehrere Größenordnungen kleiner). Die Größe des rezeptiven Feldes gibt an, welchen Ausschnitt der Eingangsdaten, auf welche der Filter angewandt wird, der Filter pro Kanal und pro Anwendung erfasst. Für einen Filter, welcher in 2D mit $l \cdot m$ Einträgen und $k$ Kanälen vorliegt, beträgt die Größe des rezeptiven Feldes $l \cdot m$ und die Filtergröße $l \cdot m \cdot k$. Auch in Bezug auf einen Filter kann man davon sprechen, dass dieser im Format Höhe · Breite · Tiefe vorliegt.

Weil die Größe des rezeptiven Feldes kleiner ist als die Eingangsdatengröße pro Kanal kann ein- und derselbe Filter an unterschiedlichen Stellen der Eingangsdaten zur Durchführung der linearen Rechenoperationen angewandt werden (Gleitfensteroperation). Anders als zwischen dicht verbundenen Schichten ist also nicht jedes Element in einer rechentechnisch betrachtet unmittelbar nachfolgenden Schicht mit jedem Element der rechentechnisch betrachtet unmittelbar vorherigen Schicht verbunden.

Die sogenannte Schrittweite (engl. stride) gibt an, wie weit die unterschiedlichen Stellen der Eingangsdaten, an denen ein- und derselbe Filter angewandt wird, zueinander verschoben sind.

Der Filter kann durch wenigstens einen Filterparameter (z. B. Matrixeinträge im Gitter des Filters und/oder ein Bias-Parameter) charakterisiert sein, sodass es durch die mehrfache Anwendung ein- und desselben Filters an unterschiedlichen Positionen der Eingangsdaten zu einem sogenannten parameter sharing kommt. Die für jeden Kanal bei jeder Durchführung erhaltenen Rechenergebnisse der linearen Rechenoperationen werden zur Bildung der Ergebnisdaten, welche als Eingangsdaten für die rechentechnisch nächste Schicht dienen, über alle Kanäle summiert. Dies kann unmittelbar bei jeder unterschiedlichen Position geschehen oder zu einem späteren Zeitpunkt.

In Bezug auf die mehrfache Anwendung ein- und desselben Filters auf Eingangsdaten (Gleitfensteroperation) sei angemerkt, dass diese Gleitfensteroperation mathematisch äquivalent in einem einzigen Arbeitsschritt als eine einzige Matrizenmultiplikation durchgeführt werden kann, indem die für jede Tiefendimension der Eingangsdaten in Höhe und Breite vorliegenden Teildaten in einen Spaltenvektor überführt werden (sogenannte Vektorisierung, engl. flattening) und der Filter in eine Matrix konvertiert wird. Durch Multiplikation des Vektors mit der Matrix ergeben sich dieselben Ergebnisdaten wie durch die Gleitfensteroperation. Da dieser Vorgang dem Stand der Technik entspricht (vgl. etwa "Charu C. Aggarwal, Neural Networks and Deep Learning, Springer International Publishing AG 2018, Kapitel 8.3.3, Seite 335ff.§) wird er hier nicht im Detail beschrieben. In Bezug auf die vorliegende Offenbarung ist immer auch die Möglichkeit einer solchen Matrizenmultiplikation mitgedacht, wenn von einer Gleitfensteroperation die Rede ist oder eine solche beschrieben wird.

Wie bereits ausgeführt, werden dem neuronalen Netzwerk über die Inputschicht Eingangsdaten mit einer bestimmten Dimensionalität und einer bestimmten Anzahl an Kanälen zugeführt. Nach Bearbeitung durch eine erste Schicht entstehen aus diesen Eingangsdaten Ergebnisdaten, welche zwar dieselbe Dimensionalität aber meist eine unterschiedliche Anzahl an Kanälen (und damit eine geänderte Datengröße) aufweisen, denn die Anzahl an Kanälen der Ergebnisdaten einer ersten Schicht ist durch die Anzahl der dieser ersten Schicht zugeordneten und verwendeten Filter gegeben. Beträgt beispielsweise die Eingangsdatengröße der über die Inputschicht zugeführten Eingangsdaten 32 · 32 in 3 Kanälen und kommen 10 Filter zum Einsatz (mit einer Größe des rezeptiven Feldes von 5 · 5 und natürlich 3 Kanälen), so entstehen Ergebnisdaten dieser ersten Schicht mit der Größe 28 · 28 in 10 Kanälen. Diese Ergebnisdaten können einer rechentechnisch unmittelbar nachfolgenden weiteren ersten Schicht (üblicherweise nach Anwendung einer nichtlinearen Aktivierungsfunktion) als Eingangsdaten zur Verfügung gestellt werden.

Die in einer ersten Schicht vorgenommenen linearen Rechenoperationen und ggf. vorgenommenen Pooling- und/oder Downsampling-Verfahren führen zu einer Verringerung der Datengröße pro Kanal.

Häufig kommen Padding-Verfahren zum Einsatz, um eine Verringerung der Datengröße der Ergebnisdaten zu verhindern oder zu verringern.

Mathematisch betrachtet, sind Eingangsdaten und/oder Filter, welche in n Gitter-Dimensionen und m Kanälen vorliegen als n · m Tensor darstellbar. Es sei angemerkt, dass solche Tensoren unter Bewahrung der räumlichen Zusammenhänge der einzelnen Elemente der Eingangsdaten auch als Vektoren darstellbar sind.

Pro erster Schicht kommen üblicherweise mehrere verschiedene Filter (welche sich z. B. durch unterschiedliche Dimensionen und/oder Filterparameter voneinander unterscheiden) zur Anwendung, wobei natürlich die Anzahl an Kanälen jedes Filters der Anzahl an Kanälen der Eingangsdaten, die durch die jeweilige erste Schicht verarbeitet werden, entsprechen muss. Die Anzahl an Filtern ist beim Stand der Technik für unterschiedliche erste Schichten unterschiedlich.

Als lineare Rechenoperation kommt häufig das innere Produkt zum Einsatz, wobei Filtergrößen der einer ersten Schicht zugeordneten Filter kleiner sind als die Eingangsdatengröße und die Filter die lineare Rechenoperation jeweils an unterschiedlichen Stellen der Eingangsdaten durchführen, sodass mathematisch von einer Faltung gesprochen werden kann.

Die obigen Ausführungen sind natürlich auch im Rahmen der ersten und/oder zweiten und/oder der dritten Variante der Erfindung anwendbar und können bei Ausführungsbeispielen der ersten und/oder zweiten und/oder der dritten Variante der Erfindung zur Anwendung kommen.

Aufgabe der zweiten Variante der Erfindung ist insbesondere die Bereitstellung eines computerimplementierten Verfahrens zum Verarbeiten von Daten mittels eines neuronalen Netzwerks, welches zwischen einer Inputschicht und einer Outputschicht eine Vielzahl von ersten Schichten aufweist, wobei jeder ersten Schicht Filter zugeordnet sind, welches mit einem geringeren Energieverbrauch und/oder zu geringeren Kosten in Hardware implementierbar ist, die Bereitstellung eines Logikbausteins, in welchem ein derartiges Netzwerk implementiert ist, einer Vorrichtung mit einem solchen Logikbaustein Computerprogrammprodukte zur Durchführung des Verfahrens und eines computerlesbaren Speichermediums.

Diese Aufgabe wird durch ein computerimplementiertes Verfahren mit den Merkmalen des Anspruchs 16, zur Durchführung eines solchen Verfahrens ausgebildete Logikbausteinen, einen Logikbaustein mit den Merkmalen des Anspruchs 30, eine Vorrichtung mit einem solchen Logikbaustein, ein Computerprogrammprodukt zur Durchführung eines solchen Verfahrens und ein computerlesbares Speichermedium mit einem solchen Computerprogrammprodukt gelöst.

Das computerimplementierte Verfahren nach der zweiten Variante der Erfindung zum Verarbeiten von Daten mittels eines neuronalen Netzwerks, sieht ein neuronales Netzwerk vor, welches zwischen einer Inputschicht und einer Outputschicht eine Vielzahl von ersten Schichten aufweist, wobei jeder ersten Schicht der Vielzahl von ersten Schichten Filter zugeordnet sind und wobei

- in jeder ersten Schicht der Vielzahl von ersten Schichten in einem oder mehreren Kanälen aus Eingangsdaten unter Verwendung von der jeweiligen ersten Schicht der Vielzahl von ersten Schichten zugeordneten Filtern durch lineare Rechenoperationen Ergebnisdaten erzeugt werden, wobei die Eingangsdaten eine Eingangsdatengröße pro Kanal aufweisen
- für jede erste Schicht der Vielzahl von ersten Schichten die Größen von rezeptiven Feldern der den ersten Schichten zugeordneten Filter kleiner sind als die Eingangsdatengröße pro Kanal jener ersten Schicht der Vielzahl von ersten Schichten, welcher die Filter jeweils zugeordnet sind und die Filter die lineare Rechenoperation jeweils an unterschiedlichen Stellen der Eingangsdaten durchführen
- in zumindest einer ersten Schicht der Vielzahl von ersten Schichten auf die Ergebnisdaten eine nichtlineare Aktivierungsfunktion zur Erzeugung von Ergebnisdaten in Form von Aktivierungsergebnisdaten angewandt wird

In Bezug auf die zwischen der Inputschicht und der Outputschicht vorliegende Vielzahl von ersten Schichten ist gemäß der zweiten Variante der Erfindung vorgesehen, dass

- eine Anzahl von einer ersten Schicht der Vielzahl von ersten Schichten zugeordneten Filtern für jede der ersten Schichten der Vielzahl von ersten Schichten gleich ist, wobei in jeder der ersten Schichten jeder der einer jeweiligen ersten Schicht zugeordneten Filter für lineare Rechenoperationen verwendet wird und

- wobei bevorzugt vorgesehen ist, dass jedem Filter ein Wichtungsfaktor zugeordnet ist, welcher festlegt, in welchem Ausmaß das Ergebnis der durch den jeweiligen Filter an den unterschiedlichen Stellen der Eingangsdaten durchgeführten Rechenoperationen bei der Erzeugung der Ergebnisdaten berücksichtigt wird

Verfolgt man den Datenfluss entlang einer Reihe von rechentechnisch betrachtet sequenziell angeordneten ersten Schichten, so bleibt die Anzahl der den einzelnen ersten Schichten zugeordneten Filtern also konstant.

Weil die Anzahl der einer ersten Schicht zugeordneten Filter für alle zwischen der Inputschicht und der Outputschicht angeordneten ersten Schichten gleich ist, weisen die Ergebnisdaten jeder ersten Schicht dieselbe Anzahl an Kanälen auf. Werden auch die rezeptiven Felder der verschiedenen Filter gleich gewählt, stimmen die Filtergrößen überein.

Die Wichtungsfaktoren können unterschiedliche numerische Werte aufweisen, diese können in einem dem Stand der Technik entsprechenden Verfahren (z. B. Backpropagation) trainiert werden. Erweist sich beim Training des neuronalen Netzwerks, dass das Rechenergebnis eines ausgewählten Filters keine Relevanz bei der Bestimmung der Ergebnisdaten hat, erhält dieser Filter z. B. einen Wichtungsfaktor mit dem numerischen Wert Null oder einen numerischen Wert nahe bei Null. Durch die Wahl eines geeigneten numerischen Werts kann die Wirkung des ausgewählten Filters festgelegt (z. B. in Bezug auf andere Filter skaliert) werden, beispielsweise durch Multiplikation des Rechenergebnisses des Filters mit dessen Wichtungsfaktor.

Erfolgt ein erneutes Training des neuronalen Netzwerks, kann es zu einer Änderung der Wichtungsfaktoren kommen.

Vorteilhafte Ausführungsformen der Erfindung sind in den abhängigen Ansprüchen definiert.

Es kann vorgesehen sein, dass bei wenigstens einer ersten Schicht der Vielzahl von ersten Schichten, vorzugsweise bei einer Vielzahl von ersten Schichten oder in allen ersten Schichten auf die Ergebnisdaten eine nichtlineare Aktivierungsfunktion (z. B. ReLU) zur Erzeugung von Ergebnisdaten in Form von Aktivierungsergebnisdaten angewandt wird.

Es kann vorgesehen sein, dass bei wenigstens einer ersten Schicht der Vielzahl von ersten Schichten, vorzugsweise bei einer Vielzahl von ersten Schichten oder in allen ersten Schichten, Reduktionsverfahren und/oder Pooling-Verfahren (z. B. Max-Pooling oder Average-Pooling) und/oder Downsampling-Verfahren auf die Anzahl von Ergebnisdaten angewandt werden.

Es kann vorgesehen sein, dass bei wenigstens einer ersten Schicht der Vielzahl von ersten Schichten, vorzugsweise bei einer Vielzahl von ersten Schichten oder in allen ersten Schichten, die durch an unterschiedlichen Stellen der Eingangsdaten durchgeführten linearen Rechenoperationen innere Produkte sind und die Ergebnisdaten das Ergebnis von Faltungen sind. In diesem Fall können die wenigstens eine erste Schicht als Faltungsschicht und das neuronale Netzwerk als Convolutional Neural Network (CNN) bezeichnet werden.

Es kann vorgesehen sein, dass das neuronale Netzwerk rechentechnisch betrachtet hinter der Vielzahl an ersten Schichten zumindest zwei zweite Schichten aufweist, die dicht miteinander verbunden sind, wobei rechentechnisch betrachtet sequenziell hinter den zumindest zwei zweiten Schichten die Outputschicht angeordnet ist oder die rechentechnisch betrachtet sequenziell als letztes angeordnete zweite Schicht als Outputschicht ausgebildet ist.

Es kann vorgesehen sein, dass wenigstens zwei erste Schichten der Vielzahl von ersten Schichten rechentechnisch betrachtet sequenziell zwischen der Inputschicht und der Outputschicht angeordnet sind.

Es kann vorgesehen sein, dass wenigstens zwei erste Schichten der Vielzahl von ersten Schichten rechentechnisch betrachtet parallel zwischen der Inputschicht und der Outputschicht angeordnet sind. So können wenigstens zwei Datenflüsse parallel erfolgen.

Die Parameter der Filter können wie im Stand der Technik bei einem Training des neuronalen Netzwerks gelernt werden.

Es kann ein Padding-Verfahren in Bezug auf die Eingangsdaten einer ersten Schicht durchgeführt werden.

In einem Logikbaustein, insbesondere ASIC, nach der zweiten Variante der Erfindung sind elektronische Schaltungsanordnungen zum Durchführen neuronaler Netzwerkberechnungen für ein neuronales Netzwerk mit einer Vielzahl von ersten Schichten, insbesondere zum Durchführen eines Verfahrens nach der zweiten Variante der Erfindung, fest vorgegeben, in dem Sinn, dass sie nach Herstellung des Logikbausteins nicht mehr verändert werden können.

Ein solcher Logikbaustein weist wenigstens einen Signalinput zum Zuführen von Input für das neuronale Netzwerk und wenigstens einen Signaloutput zur Abgabe von Output auf. Der Signalinput kann beispielsweise direkt mit einer geeigneten Signalerzeugungsvorrichtung (z. B. 2D- oder 3D-Kamera, Mikrophon, Sensoren für nicht-visuelle oder nicht-akustische Messwerte usw.) in Verbindung stehen oder Daten aus einem Speicher oder von einem Prozessor erhalten. Der Signaloutput kann mit einer Bildgebungsvorrichtung, einem Speicher, einem Prozessor oder einem Aktor, z. B. eines Fahrzeugs, kommunizieren.

Ein solcher Logikbaustein weist weiters auf:

- eine Vielzahl von jeweils eine Schicht des neuronalen Netzwerks repräsentierenden Schicht-Schaltungsanordnungen, wobei jede Schicht-Schaltungsanordnung wenigstens einen Signaleingang zum Erhalt von Eingangsdaten und wenigstens einen Signalausgang zur Abgabe von Ergebnisdaten aufweist und wobei jede Schicht-Schaltungsanordnung wenigstens eine erste Schicht aufweist, in welcher jeweils in einem oder mehreren Kanälen aus eine Eingangsdatengröße pro Kanal aufweisenden Eingangsdaten unter Verwendung einer Anzahl von der wenigstens einen ersten Schicht zugeordneten Filtern durch lineare Rechenoperationen eine Anzahl von Ergebnisdaten erzeugbar ist, wobei die Größen von rezeptiven Feldern der der wenigstens einen ersten Schicht zugeordneten Filter kleiner sind als die Eingangsdatengröße pro Kanal der wenigstens einen ersten Schicht, und wobei die Filter die lineare Rechenoperation jeweils pro Kanal an unterschiedlichen Stellen der Eingangsdaten durchführen, wobei alle Schicht-Schaltungsanordnungen dieselbe Anzahl von Filtern, welche der wenigstens einen ersten Schicht zugeordnet sind, aufweisen und wobei in jeder der wenigstens einen ersten Schichten jeder Schicht-Schaltungsanordnung jeder der einer jeweiligen ersten Schicht zugeordneten Filter für lineare Rechenoperationen verwendet wird und wobei bevorzugt vorgesehen ist, dass jedem Filter ein Wichtungsfaktor zugeordnet ist, welcher festlegt, in welchem Ausmaß das Ergebnis der durch den jeweiligen Filter an den unterschiedlichen Stellen der Eingangsdaten durchgeführten Rechenoperationen bei der Erzeugung der Ergebnisdaten berücksichtigt wird
- eine Output-Schaltungsanordnung, welche mit dem Signaloutput verbunden ist
- wenigstens eine Scheduler-Schaltungsanordnung, welche mit der Vielzahl von Schicht-Schaltungsanordnungen in Datenverbindung steht und welche zur Definition einer Netzarchitektur des neuronalen Netzwerks dazu ausgebildet ist, gemäß einer änderbaren Vorgabe festzulegen, in welcher Reihenfolge ein Datenfluss vom Signalinput des Logikbaustein zu den einzelnen Schicht-Schaltungsanordnungen, zwischen den einzelnen Schicht-Schaltungsanordnungen und von den einzelnen Schicht-Schaltungsanordnungen zur Output-Schaltungsanordnung erfolgt

In einem solchen Logikbaustein ist also ein neuronales Netzwerk konfiguriert, dessen einzelne Schicht-Schaltungsanordnungen zwar fest vorgegeben sind, in dem Sinn, dass sie nach Herstellung des Logikbausteins nicht mehr verändert werden können, bei denen aber bei ein- und demselben Logikbaustein unterschiedliche Netzarchitektur durch entsprechende Vorgabe an die Scheduler-Schaltungsanordnung realisierbar sind.

Jene erste Schicht-Schaltungsanordnung, welcher rechentechnisch betrachtet direkt einen Datenfluss vom Signalinput erhält, repräsentiert die Inputschicht des neuronalen Netzwerks. Die Output-Schaltungsanordnung repräsentiert die Outputschicht des neuronalen Netzwerks. Der Datenfluss zwischen den ersten Schicht-Schaltungsanordnungen erfolgt so, wie es der durch die Scheduler-Schaltungsanordnung gemäß einer änderbaren Vorgabe vorgegebenen Netzarchitektur entspricht.

Vorteilhafte Ausführungsformen des Logikbausteins nach der zweiten Variante der Erfindung sind in den abhängigen Ansprüchen definiert.

Der Logikbaustein nach der zweiten Variante der Erfindung ist bevorzugt für den Inferenz-Betrieb des neuronalen Netzwerks vorgesehen, sodass an sich eine nachträgliche Änderung der Anzahl an Filtern (natürlich so, dass aller erste Schicht-Schaltungsanordnungen stets dieselbe Anzahl von Filtern aufweisen) und/oder von Filterparametern und/oder rezeptives Feld und/oder von Wichtungsfaktoren nicht erforderlich ist. Daher können diese bevorzugt fest, d. h. unveränderlich im Logikbaustein konfiguriert sein. Es kann aber alternativ vorgesehen sein, dass diese Größen in einer RAM-Schaltungsanordnung des Logikbausteins veränderbar abgelegt sind.

Es kann vorgesehen sein, dass bei wenigstens einer ersten Schicht-Schaltungsanordnung der Vielzahl von ersten Schicht-Schaltungsanordnungen, vorzugsweise bei einer Vielzahl von ersten Schicht-Schaltungsanordnungen oder in allen ersten Schicht-Schaltungsanordnungen, die durch an unterschiedlichen Stellen der Eingangsdaten durchgeführten linearen Rechenoperationen innere Produkte sind und die Ergebnisdaten das Ergebnis von Faltungen sind. In diesem Fall können die wenigstens eine erste Schicht-Schaltungsanordnung als Faltungs-Schicht-Schaltungsanordnung und das im Logikbaustein konfigurierte neuronale Netzwerk als Convolutional Neural Network (CNN) bezeichnet werden.

Es kann vorgesehen sein, dass in wenigstens einer ersten Schicht-Schaltungsanordnung, vorzugsweise bei einer Vielzahl von ersten Schicht-Schaltungsanordnungen oder in allen ersten Schicht-Schaltungsanordnungen, wenigstens einen, vorzugsweise mehrere oder alle Funktionsbaustein(e) ausgewählt aus nachstehender Liste aufweist:

- eine Cache-Speicheranordnung
- einen Bias-Baustein zum Entfernen eines ggf. vorhandenen Bias
- einen Rektifizier-Baustein zum Durchführen eines Rektifiziervorgangs
- einen Pooling-Baustein zum Durchführen eines Pooling-Verfahrens, z. B. Max-Pooling oder Average-Pooling
- einen Aktivierungs-Baustein zum Ausführen einer nichtlinearen Aktivierungsfunktion zur Erzeugung von Ergebnisdaten in Form von Aktivierungsergebnisdaten
- einen Padding-Baustein zur Durchführung eines Padding-Verfahrens

Es kann vorgesehen sein, dass bei wenigstens einer ersten Schicht-Schaltungsanordnung der Vielzahl von ersten Schicht-Schaltungsanordnungen, vorzugsweise bei einer Vielzahl von ersten Schicht-Schaltungsanordnungen oder in allen ersten Schicht-Schaltungsanordnungen, mehrere (z. B. alle der in obiger Liste angegebenen) Funktionsbausteine fest vorgegeben sind und (beispielsweise über den Scheduler) festlegbar ist, welcher der Funktionsbausteine in der wenigstens einen ersten Schicht-Schaltungsanordnung der Vielzahl von ersten Schicht-Schaltungsanordnungen, vorzugsweise bei einer Vielzahl von ersten Schicht-Schaltungsanordnungen oder in allen ersten Schicht-Schaltungsanordnungen aktiv sein soll und welcher nicht. So ist es möglich, dass mehrere oder alle erste Schicht-Schaltungsanordnungen zwar an sich mit denselben fest vorgegebenen Funktionsbausteinen ausgebildet sein, sie sich aber dennoch in ihrer Funktionalität voneinander unterscheiden, wenn nicht in allen Schicht-Schaltungsanordnungen dieselben Funktionsbausteine aktiv geschalten sind.

Die Funktionalitäten der einzelnen Funktionsbausteine werden im Folgenden erläutert.

In der Cache-Speicheranordnung kann in Bezug auf jeden der Filter einer ersten Schicht-Schaltungsanordnung ein Aufsummieren der durch den Filter für jeden Kanal durchgeführten linearen Rechenoperation über alle Kanäle durchgeführt werden. Zusätzlich oder alternativ können andere Terme zum Ergebnis der linearen Rechenoperation summiert werden, wie beispielsweise aus anderen ersten Schicht-Schaltungsanordnungen kommende Terme. In Cache-Speicheranordnungen unterschiedlicher erster Schicht-Schaltungsanordnungen können unterschiedliche Summationen vorgesehen sein.

Im Bias-Baustein kann ein ggf. vorhandenes Bias entfernt werden, um ein unerwünschtes numerisches Anwachsen der Ergebnisse der linearen Rechenoperationen zu vermeiden.

Im Rektifizier-Baustein kann eine nichtlineare Aktivierungsfunktion (z. B. ReLU) zur Erzeugung von Ergebnisdaten in Form von Aktivierungsergebnisdaten durchgeführt werden. In den Aktivierungs-Bausteinen unterschiedlicher erster Schicht-Schaltungsanordnungen können verschiedene nichtlineare Aktivierungsfunktionen vorgesehen sein.

Im Pooling-Baustein kann ein nach dem Stand der Technik ausgebildetes Pooling- und/oder Downsampling-Verfahren durchgeführt werden. In den Pooling-Bausteinen unterschiedlicher erster Schicht-Schaltungsanordnungen können verschiedene Pooling- und/oder Downsampling-Verfahren vorgesehen sein.

Es kann vorgesehen sein, dass durch die Scheduler-Schaltungsanordnung eine Netzarchitektur so definiert ist, dass

- wenigstens zwei erste Schicht-Schaltungsanordnungen rechentechnisch betrachtet sequenziell zwischen der Inputschicht und der Outputschicht angeordnet sind und/oder
- wenigstens zwei erste Schicht-Schaltungsanordnungen rechentechnisch betrachtet parallel zwischen der Inputschicht und der Outputschicht angeordnet sind

Es kann vorgesehen sein, dass durch die Scheduler-Schaltungsanordnung eine Netzarchitektur so definiert ist, dass von wenigstens einem Funktionsbaustein einer ersten Schicht-Schaltungsanordnung ein Datenfluss direkt zu wenigstens einem Funktionsbaustein einer anderen ersten Schicht-Schaltungsanordnung erfolgt, d. h. ohne über den Signalausgang der einen ersten Schicht-Schaltungsanordnung zu dem Signaleingang der anderen Schaltungsanordnung zu gehen. So kann beispielsweise vorgesehen sein, dass Ergebnisdaten linearer Rechenoperationen der einen ersten Schicht-Schaltungsanordnung - ggf. gemeinsam mit Ergebnisdaten linearer Rechenoperationen der anderen ersten Schicht-Schaltungsanordnung - einem Aktivierungsbaustein in der anderen Schicht-Schaltungsanordnung zum Ausführen einer nichtlinearen Aktivierungsfunktion zur Erzeugung von Ergebnisdaten in Form von Aktivierungsergebnisdaten zugeführt werden.

Es kann vorgesehen sein, dass durch die Scheduler-Schaltungsanordnung eine Netzarchitektur so definiert ist, dass wenigstens eine ersten Schicht-Schaltungsanordnung in Bezug auf den Datenfluss mehr als einmal durchlaufen wird, dass also der Datenfluss wenigstens einmal im Zuge der Berechnung vom Signalausgang dieser wenigstens einen ersten Schicht-Schaltungsanordnung zum Signalausgang dieser wenigstens einen ersten Schicht-Schaltungsanordnung verläuft.

Es kann vorgesehen sein, dass im Logikbaustein zumindest zwei zweite Schicht-Schaltungsanordnungen fest vorgegeben sind, die dicht miteinander verbundene zweite Schichten repräsentieren, wobei entweder rechentechnisch betrachtet (also in Bezug auf den Datenfluss) sequenziell hinter den zumindest zwei zweiten Schichten die Outputschicht angeordnet ist oder die rechentechnisch betrachtet sequenziell als letztes angeordnete zweite Schicht als Outputschicht ausgebildet ist.

Bei einer Vorrichtung mit einem Logikbaustein nach der zweiten Variante der Erfindung ist vorgesehen, dass dem wenigstens einen Logikbaustein über zumindest einen Signalinput durch zumindest eine an oder in der Vorrichtung angeordnete Signalerzeugungsvorrichtung Signale als Input für die neuronalen Netzwerkberechnungen zuführbar sind und wobei der wenigstens eine Logikbaustein über zumindest einen Signaloutput zur Kommunikation mit einer Steuer- oder Regelvorrichtung der Vorrichtung oder zur Abgabe von Steuerbefehlen an wenigstens einen Aktor der Vorrichtung aufweist. Dies kann einem Assistenzbetrieb oder einem autonomen Betrieb der Vorrichtung dienen. Die Vorrichtung kann beispielsweise als Fahrzeug oder als Roboter ausgebildet sein.

In der von der ersten und der zweiten Variante unabhängigen dritten Variante betrifft die Erfindung ein Verfahren mit den Merkmalen des Oberbegriffs des Anspruchs 23, Logikbausteine zur Durchführung eines solchen Verfahrens, eine Vorrichtung mit einem solchen Logikbaustein, Computerprogramme zur Durchführung des Verfahrens und ein Speichermedium.

Die Konfiguration von neuronalen Netzwerken auf Logikbausteinen wie FPGAs und ASICs stellt sich häufig aufgrund der erforderlichen hohen Rechenleistung und des massiven Speicherbedarfs als schwierig dar.

Die Veröffentlichung "An Overview of Arithmetic Adaptations for Inference of Convolutional Neural Networks on Re-configurable Hardware" von Ilkay Wunderlich, Benjamin Koch und Sven Schönfeld (https://www.iaria.org/conferences2020/ProgramALLDATA20.html) stellt Strategien vor, wie diese Portierung so erfolgen kann, dass geringere Rechenleistungen und ein geringerer Speicherbedarf erforderlich sind. Dabei wird vor allem auf eine sogenannte Quantisierung abgestellt, bei welcher als arithmetische Grundstruktur während des Trainings des neuronalen Netzwerks eine Gleitzahl-Arithmetik und während des Inferenzbetriebs eine Ganzzahl-Arithmetik zum Einsatz kommt, wobei die im Training als Gleitzahlen ermittelten Parameterwerte des neuronalen Netzwerks durch Multiplikation mit einem Skalierungsfaktor und anschließender Rundung auf ganzzahlige Werte quantisiert werden. Dies gilt auch für die Rechenoperationen des neuronalen Netzwerks, z. B. kann die Faltungsoperation auf Basis von int32 durchgeführt werden und/oder als nichtlineare Aktivierungsfunktion kann eine quantisierte nichtlineare Aktivierungsfunktion verwendet werden.

Durch die in der Veröffentlichung besprochenen Maßnahmen, die auch bei der ersten, zweiten oder dritten Variante der Erfindung zur Anwendung kommen können, konnte der Inferenzbetrieb eines neuronalen Netzwerks, welches außerhalb eines Logikbausteins trainiert und auf einen Logikbaustein portiert wurde, deutlich beschleunigt werden.

Aufgabe der dritten Variante der Erfindung ist insbesondere die Bereitstellung eines computerimplementierten Verfahrens zum Verarbeiten von Daten mittels eines neuronalen Netzwerks, welches bei der Implementierung in einem Logikbaustein einen schnelleren Inferenzbetrieb gestattet, die Bereitstellung eines Logikbausteins, in welchem ein derartiges neuronales Netzwerk implementiert ist, einer Vorrichtung mit einem solchen Logikbaustein, Computerprogrammprodukte zur Durchführung des Verfahrens und eines computerlesbaren Speichermediums.

Diese Aufgabe wird durch ein computerimplementiertes Verfahren mit den Merkmalen des Anspruchs 23, zur Durchführung eines solchen Verfahrens ausgebildete Logikbausteinen, eine Vorrichtung mit einem solchen Logikbaustein, ein Computerprogrammprodukt zur Durchführung eines solchen Verfahrens und ein computerlesbares Speichermedium mit einem solchen Computerprogrammprodukt gelöst.

Das Verfahren nach der dritten Variante der Erfindung sieht ein computerimplementiertes Verfahren zum Verarbeiten von Daten mittels eines neuronalen Netzwerks vor, wobei das neuronale Netzwerk zwischen einer Inputschicht und einer Outputschicht eine Vielzahl von ersten Schichten aufweist (wobei jeder ersten Schicht der Vielzahl von ersten Schichten Filter zugeordnet sein können) und wobei

- in jeder ersten Schicht der Vielzahl von ersten Schichten in einem oder mehreren Kanälen aus Eingangsdaten (vorzugsweise unter Verwendung von der jeweiligen ersten Schicht der Vielzahl von ersten Schichten zugeordneten Filtern) durch lineare Rechenoperationen Ergebnisdaten erzeugt werden, wobei die Eingangsdaten eine Eingangsdatengröße pro Kanal aufweisen
- (optional: für jede erste Schicht der Vielzahl von ersten Schichten die Größen von rezeptiven Feldern der den ersten Schichten zugeordneten Filter kleiner sind als die Eingangsdatengröße pro Kanal jener ersten Schicht der Vielzahl von ersten Schichten, welcher die Filter jeweils zugeordnet sind und die Filter die lineare Rechenoperation jeweils an unterschiedlichen Stellen der Eingangsdaten durchführen)
- in zumindest einer ersten Schicht der Vielzahl von ersten Schichten auf die Ergebnisdaten eine nichtlineare Aktivierungsfunktion zur Erzeugung von Ergebnisdaten in Form von Aktivierungsergebnisdaten angewandt wird
- während eines Trainings des neuronalen Netzwerks (welches bevorzugt außerhalb eines Logikbausteins erfolgt) in der zumindest einen ersten Schicht der Vielzahl von ersten Schichten, vorzugsweise in allen ersten Schichten der Vielzahl von ersten Schichten, zur Erzeugung der Aktivierungsergebnisdaten eine nichtlineare Aktivierungsfunktion mit einem ersten Bildbereich verwendet wird
- während eines Inferenzbetriebs des neuronalen Netzwerks, welcher vorzugsweise unter Verwendung eines Logikbausteins erfolgt, in der zumindest einen ersten Schicht der Vielzahl von ersten Schichten, vorzugsweise in allen ersten Schichten der Vielzahl von ersten Schichten, zur Erzeugung der Aktivierungsergebnisdaten eine nichtlineare Aktivierungsfunktion mit einem zweiten Bildbereich verwendet wird, wobei der zweite Bildbereich eine echte Teilmenge des ersten Bildbereichs bildet.

Die Verwendung einer nichtlinearen Aktivierungsfunktion mit einem zweiten Bildbereich (in welchem die Aktivierungsergebnisdaten liegen), der eine echte Teilmenge des ersten Bildbereichs bildet (d. h. der erste und der zweite Bildbereich sind nicht identisch), wird im Folgenden als "Aktivierungskompression" (engl. "activation clipping" bezeichnet.

Mit der Aktivierungskompression wird der Wertebereich der Aktivierungsergebnisdaten eingeschränkt (vom größeren ersten Bildbereich auf den kleineren zweiten Bildbereich). Dafür werden z. B. Werte für eine untere und/oder eine obere Grenze festgelegt, die beispielhaft als " Lower Bound L" und "Upper Bound U" bezeichnet werden. Die numerischen Werte der oberen und unteren Grenze können z. B. abgesehen vom Vorzeichen gleich sein, oder sie können unterschiedliche numerische Werte aufweisen. Äquivalent zur Definition einer unteren und/oder oberen Grenze kann natürlich ein entsprechender Bereich definiert werden.

Der Fachmann wählt die obere Grenze und/oder untere Grenze zur Erhöhung der Geschwindigkeit der Durchführung des erfindungsgemäßen Verfahrens unter Berücksichtigung der zu erzielenden Genauigkeit. Eine Wahl eines derart kleinen Bereiches, dass die obere Grenze nahe der unteren Grenze entspricht oder die obere Grenze der untere Grenze entspricht, kann eine Reduktion der Genauigkeit des erfindungsgemäßen Verfahrens mit sich ziehen.

Eine Funktion, mit der die Aktivierungskompression beispielhaft durchgeführt werden kann, wird im Folgenden als "geclippte" Aktivierungsfunktion oder "Clipping Function" bezeichnet und kann dabei so definiert werden, dass Ergebnisdaten der nichtlinearen Aktivierungsfunktion, die beim Inferenzbetrieb des neuronalen Netzwerks oberhalb/unterhalb der oberen/unteren Grenze liegen, auf die obere/untere Grenze abgebildet werden und solche Ergebnisdaten, die zwischen der oberen und unteren Grenze liegen, unverändert bleiben. In diesem Fall ergibt sich also zwischen der oberen und der unteren Grenze ein Verlauf der Ergebnisdaten entsprechend der bereits im Training gewählten nichtlinearen Aktivierungsfunktion, während außerhalb dieser Grenzen jeweils ein konstanter Wert in Form der gewählten oberen bzw. unteren Grenze vorliegt, sodass der (zweite) Bildbereich der geclippten Aktivierungsfunktion eine echte Teilmenge des (ersten) Bildbereichs der beim Training verwendeten nichtlinearen Aktivierungsfunktion ist.

Es sei angemerkt, dass zwar einige nichtlineare Aktivierungsfunktionen existieren, welche bereits untere und obere Grenzen für den Wertebereich enthalten, wie zum Beispiel die Funktion ReLU-6 mit L = 0 und U = 6. Allerdings liefern solche Aktivierungsfunktionen, wenn sie bereits im Training eingesetzt werden, eine deutlich niedrigere Präzision als wenn beim Training eine nichtlineare Aktivierungsfunktion, wie z. B. LReLU, verwendet wird im Inferenzbetrieb eine geclippte Aktivierungsfunktion verwendet wird. Die im Training eingesetzte nichtlineare Aktivierungsfunktion kann einen unbeschränkten (ersten) Bildbereich aufweisen.

Die Aktivierungskompression bewirkt eine Steigerung der Geschwindigkeit des Inferenzbetriebs eines auf einem Logikbaustein konfigurierten neuronalen Netzwerks. Zum Beispiel konnte bei der Portierung eines TinyYOLOv3 CNN mit einer Eingangsgröße von 320 x 320 x 3 bei der Klassifizierung von Objekten oder Personen in einem Kamerabild oder Videostream eine Steigerung der Framerate von ca. 50 % bei Portierung auf einem XILINX Artix-7 FPGA erzielt werden, was eine verringerte Latenz bedeutet.

Es ist besonders bevorzugt, dass während des Trainings und während des Inferenzbetriebs des neuronalen Netzwerks nichtlineare Aktivierungsfunktionen verwendet werden, die abgesehen von den unterschiedlichen Bildbereichen identisch sind (z. B. LReLU während des Trainings und eine sich aus der Komposition von LReLU mit einer clip-Funktion ergebende Aktivierungsfunktion clip-LReLU).

Zur Durchführung der Aktivierungskompression kann entweder vorgesehen sein:

- in einem ersten Schritt eine nichtlineare Aktivierungsfunktion zu verwenden, welche den ersten Bildbereich aufweist (vorzugsweise jene Aktivierungsfunktion, die bereits beim Training verwendet wurde) und dann in einem zweiten Schritt den ersten Bildbereich auf den zweiten Bildbereich zu verkleinern (also Clippen erst nach Aktivieren), oder
- gleich eine nichtlineare Aktivierungsfunktion zu verwenden, welche bereits den zweiten Bildbereich aufweist (also eine bereits geclippte Aktivierungsfunktion beim Aktivieren verwenden, sodass das Clippen nicht mehr als gesonderter Schritt erforderlich ist)

Es ist bevorzugt, dass als nichtlineare Aktivierungsfunktion eine ReLU-Funktion oder eine leaky ReLU-Funktion (LReLU) verwendet wird. Diese Funktionen zeichnen sich im Vergleich zur anderen nichtlineare Aktivierungsfunktionen wie z. B. tanh durch eine geringere Komplexität aus, was sie weniger rechenaufwendig und in Hardware mit Festkommaarithmetik einfacher realisierbar macht.

Es kann vorgesehen sein, dass beim Training des neuronalen Netzwerks eine Gleitzahl-Arithmetik verwendet wird, welche für den Inferenzbetrieb des neuronalen Netzwerks zu einer Ganzzahl-Arithmetik quantisiert wird.

Dabei kann vorgesehen sein, dass auf die im zweiten Bildbereich liegenden Ergebnisaktivierungsdaten eine Mapping-Operation angewandt wird, welche die Ergebnisaktivierungsdaten auf einen vorgegebenen Integer-Datentyp, vorzugsweise uint8, abbildet, wie dies bereits in der oben zitierten Veröffentlichung zur Quantisierung von neuronalen Netzwerken beschrieben ist.

Es kann vorgesehen sein, dass eine Demapping-Operation auf die auf den vorgegebenen Datentyp abgebildeten Ergebnisaktivierungsdaten angewandt wird, bevor in einer nachfolgenden ersten Schicht der Vielzahl von ersten Schichten durch lineare Rechenoperationen (bevorzugt unter Verwendung von der nachfolgenden ersten Schicht zugeordneten Filtern) Ergebnisdaten erzeugt werden, wie dies bereits in der oben zitierten Veröffentlichung zur Quantisierung von neuronalen Netzwerken beschrieben ist.

Die erste Variante der Erfindung, die zweite Variante der Erfindung und die dritte Variante der Erfindung können gemeinsam eingesetzt werden. Die in Bezug auf eine Variante der Erfindung gemachten Ausführungen sind auch in Bezug auf die anderen Varianten der Erfindung anwendbar. Insbesondere kann das in Bezug auf die erste Variante der Erfindung beschriebene neuartige Verfahren zur Bestimmung einer optimalen Anzahl von Filtern (beispielsweise Weiterentwicklung der "Pruning" oder "Spiking"-Verfahren) auch bei der zweiten und/oder der dritten Variante der Erfindung zur Anwendung kommen.

Filter, welche beim erfindungsgemäßen Verfahren nach der ersten und/oder zweiten und/oder der dritten Variante der Erfindung zum Einsatz kommen können sind beispielhaft in Figur 1 gezeigt. Das erfindungsgemäße Verfahren nach der ersten Variante der Erfindung wird durch die angehängten Figuren 2 bis 6 erläutert, ein erfindungsgemäßes Verfahren nach der zweiten Variante der Erfindung, ein erfindungsgemäßer Logikbaustein, eine Darstellung eines neuronalen Netzwerks, welches durch das erfindungsgemäße Verfahren nach der zweiten Variante der Erfindung berechnet und/oder im erfindungsgemäßen Logikbaustein repräsentiert sein kann und Vorrichtungen mit einem erfindungsgemäßen Logikbaustein werden in den Figuren 7 bis 11 gezeigt, ein erfindungsgemäßes Verfahren nach der dritten Variante der Erfindung wird in den Figuren 12 bis 14 gezeigt, wobei die in den

Figuren enthaltenen Abkürzungen die folgenden Elemente kennzeichnen.

| | |
|---|---|
| ID, ID#, ID" | Eingangsdaten (input data) |
| OD | Ergebnisdaten (output data) |
| WF | Wichtungsfaktor (weighting factor) |
| 1 | (erster) Filterverfahrensschritt |
| 2 | (zweiter) Filterverfahrensschritt |
| 3 | Rückführung der Ergebnisdaten als Eingangsdaten |
| 4 | Rechteck |
| 5 | Schaltung |
| 6 | Vorrichtung |
| 7 | Logikbaustein |
| 8 | Steuer- oder Regelvorrichtung der Vorrichtung |
| 9 | Signalerzeugungsvorrichtung |
| 10 | Aktoren der Vorrichtung |
| 100 | neuronales Netzwerk |
| 101 | erste Schicht |
| 102 | zweite Schicht |
| 103 | Inputschicht |
| 104 | Outputschicht |
| 105 | Filter |
| 200 | Logikbaustein |
| 201 | erste Schicht-Schaltungsanordnung |
| 202 | zweite Schicht-Schaltungsanordnung |
| 203 | Signalinput |
| 204 | Signaloutput |
| 205 | Scheduler-Schaltungsanordnung |
| 206 | RAM-Schaltungsanordnung |
| 207 | Cache-Speicheranordnung |
| 208 | BIAS-Baustein |
| 209 | Rektifizier-Baustein |
| 210 | Pooling-Baustein |
| 211 | Padding-Baustein |

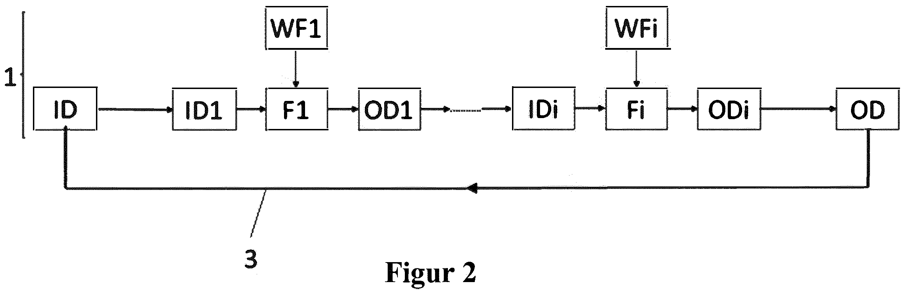

Der Gegenstand wird durch die Patentansprüche bestimmt. Die Figur 2, die Figur 3 und die Figur 4 sowie die Figurenbeschreibungen veranschaulichen lediglich die in den Figuren dargestellten Ausführungsformen des erfindungsgemäßen Verfahrens nach der ersten und/oder der zweiten und/oder der dritten Variante. Der Fachmann ist in der Lage, die Figurenbeschreibungen aller Figuren miteinander oder eine Figurenbeschreibung zu einer Figur mit dem oben angeführten allgemeinen Beschreibungsteil zu kombinieren.

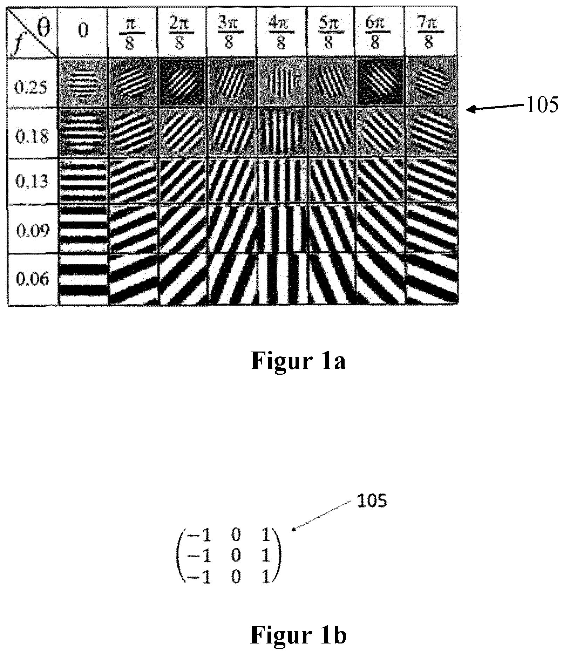

Figur 1a veranschaulicht beispielhaft ein Filterkriterium nach dem Stand der Technik (2D-Gabor-Filter mit Orientierung $\theta$ und Frequenz $f$), welches Filterkriterium bei einem Filter anwendbar ist. Dieses Filterkriterium oder ein Filter umfassend ein derartiges Filterkriterium ist auch bei dem erfindungsgemäßen Verfahren nach der ersten und/oder zweiten und/oder der dritten Variante anwendbar ist. Bei dem in Figur 1a dargestellten Beispiel eines Filterkriteriums werden aus Eingangsdaten Ausgangsdaten durch Überlagerung mit dem Filter umfassend das Filterkriterium in Abhängigkeit der Konizität der Bildpunkte ermittelt. Gleichsam zu dem in Figur 1a dargestellten Filterkriterium sind auch andere Filterkriterien nach der gängigen Lehre einsetzbar. Beispielsweise ist in Figur 1b ein 2D-Filter (Prewitt-Filter) im Format 3 . 3 . 1 zur Detektion vertikaler Daten in einem einkanaligen 2D-Bild gezeigt.

Figur 2 veranschaulicht eine Ausführungsform des erfindungsgemäßen Verfahrens nach der ersten und/oder der zweiten und/oder der dritten Variante zur Verarbeitung von Daten in neuronalen Netzen.

Es ist nach dem Stand der Technik allgemein bekannt, dass die Eingangsdaten unter Anwendung von einer Anzahl von i Filtern (i=1, 2, 3...) analysiert werden. Es werden hierbei die Eingangsdaten nacheinander mittels der sequentiell angeordneten Filter analysiert, wobei jeder Filter ein Filterkriterium aufweist. In einer vorteilhaften Weise können die Filterkriterien der einzelnen Filter unterschiedlich sein.

Die Eingangsdaten ID gehen als erste Eingangsdaten ID 1 zur Analyse mittels des ersten Filters F1 ein, wobei erste Ergebnisdaten OD1 ermittelt werden. Die i-1-ten Ergebnisdaten ODi-1 gehen als i-te Eingangsdaten Idi zur Analyse mittels des i-ten Filters Fi ein, wobei i-te Ergebnisdaten ODi ermittelt werden. Die Eingangsdaten ID werden sohin mittels einer Kette von i Filtern analysiert, wobei die in der Kette zuletzt ermittelten Ergebnisdaten ODi den Ergebnisdaten OD des Filterverfahrensschrittes mittels der i Filter entsprechen.

Es ist jedem Filter Fi (i=1, 2, 3,....) ein Wichtungsfaktor WFi (i=1, 2, 3,...) zugewiesen. Es ist beispielsweise dem ersten Filter F1 ein erster Wichtungsfaktor WF1 zugewiesen. Es ist dem i-ten Filter Fi (i=1, 2, 3,...) der i-te Wichtungsfaktor WFi (i=1, 2, 3,...) zugewiesen. Die mathematische Zuweisung eines Wichtungsfaktor WFi zu einem Filter Fi kann derart sein, dass die mittels des Filters Fi (i=1, 2, 3,...) ermittelte Ergebnisdaten ODi (i=1, 2, 3,..) mit dem jeweiligen Wichtungsfaktor Wi (i=1, 2, 3,...) multipliziert werden. Die Zuweisung eines Wichtungsfaktors zu einem Filter kann auch eine Logik umfassen, sodass bei einem Wichtungsfaktor Wi gleich Null die Ergebnisdaten ODi den Wert Null aufweisen.

Die in Figur 2 dargestellte, mit dem Bezugszeichen 1 gekennzeichnete Zeile entspricht einem Filterverfahrensschritt. Es kann ein Filterverfahrensschritt 1 wiederholt werden, indem die Ausgangsdaten eines Filterverfahrensschrittes als Eingangsdaten des nachfolgenden Filterverfahrensschrittes rückgeführt werden. In einer vorteilhaften Weise werden die Ergebnisdaten OD vor der Rückführung in einem Speicher abgelegt, welche optionaler Vorgang in Figur 2 nicht dargestellt ist. Die Rückführung der Ausgangsdaten als Eingangsdaten für den nachfolgenden Filterverfahrensschritt ist durch den Pfeil 2 in Figur 2 dargestellt.

Die in Figur 2 beschriebene Ausführungsform des erfindungsgemäßen Verfahrens nach der ersten und/oder der zweiten und/oder der dritten Variante zeichnet sich dadurch aus, dass die Anzahl der Filter Fi (i=1, 2, 3,....) über die Anzahl der Filterverfahrensschritte unverändert ist. Es weisen sohin alle Filterverfahrensschritte eine statische Anzahl von Filtern zur Erstellung von Ergebnisdaten auf.

Nach dem Stand der Technik weist i=1, 2, 3... einen an das jeweilige Analyseproblem angepassten Betrag auf; i variiert mit dem jeweiligen Analyseproblem. Dies hat zur Folge, dass bei einer ausschließlichen Anwendung der gängigen Lehre ein Verfahrensschritt - nicht wie in Figur 2 durch das Bezugszeichen 3 dargestellt - die Filterverfahrensschritte wiederholbar sind. Die Umsetzung der gängigen Lehre ist auf eine sequentielle Anordnung der Filter F1... Fi ausschließlich zu einer Filterkette beschränkt.

Das erfindungsgemäße Verfahren nach der ersten und/oder der zweiten und/oder der dritten Variante zeichnet sich dadurch aus, dass i einen statischen Wert aufweist. Der statische Wert wird bei einer Anwendung des erfindungsgemäßen Verfahrens nach der ersten und/oder der zweiten Variante auf eine Analyse nach dem Prinzip neuronaler Netze beim Anlernen des Systems festgelegt. Im Unterschied zu der oben kurz beschriebenen Systematik der gängigen Lehre, welche auf dem Weglassen von nicht erforderlicher Filter basiert, ist beim erfindungsgemäßen Verfahren nach der ersten und/oder der zweiten Variante vorgesehen, dass unter Aufrechterhaltung der statischen Anzahl der Filter F1... Fi einem nicht erforderlichen Filter ein Wichtungsfaktor Null oder nahezu Null zugewiesen wird.

Die statische Anzahl der anzuwendenden Filter hat den Effekt, dass ein auf der Anwendung einer Anzahl von Filtern basierender Filterverfahrensschritt wiederholbar ist. Die sich wiederholenden Filterverfahrensschritte sind in einer vorteilhaften Weise auf einem Rechenprozessor umfassend ASCI-Bausteine durchführbar.

Wie oben erläutert ist jedem Filter Fi (i=1, 2, 3...) ein Wichtungsfaktor WFi (i=1, 2, 3...) zugewiesen.

Ein Wichtungsfaktor WFn der Wichtungsfaktoren WFi (n ε i=1, 2, 3,...) kann einen Wichtungsfaktorwert mit dem Wert Null annehmen. Dies hat den Effekt, dass der Filter Fn, welchem Filter Fn der Wichtungsfaktor WFn mit dem Wert Null zugewiesen ist, in schalttechnischer Hinsicht erhalten ist und eine dementsprechende Analyse der Eingangsdaten IDn durchgeführt wird, jedoch das Produkt aus Ergebnisdaten ODn und WFn den Wert Null annimmt. Der Filter Fn hat somit keinen Einfluss auf die Ergebnisdaten OD des Filterverfahrensschrittes. In Bezug auf die oben angeführte Beschreibung zu Figur 2 zeichnet sich das erfindungsgemäße Verfahren nach der ersten und/oder der zweiten und/oder der dritten Variante dadurch aus, dass unter Aufrechterhaltung einer statischen Anzahl der Filter der Einfluss eines Filters über den zugewiesenen Wichtungsfaktor mit dem Wert Null gleich Null gesetzt wird.

Ein Wichtungsfaktor WFn der Wichtungsfaktoren Wi (n ε i=1, 2, 3,...) kann einen Wichtungsfaktorwert ungleich Null annehmen. Dies hat den Effekt, dass der Filter Fn, welchem Filter Fn der Wichtungsfaktor WFn mit dem Wert Null zugewiesen ist, in schalttechnischer Hinsicht erhalten ist und eine dementsprechende Analyse der Eingangsdaten IDn durchgeführt wird, wobei das Produkt aus Ergebnisdaten ODn und WFn einen Wert ungleich Null annimmt. Der Filter Fn hat somit einen Einfluss auf die Ergebnisdaten OD des Filterverfahrensschrittes.

Der Fachmann erkennt, dass zum Erreichen eines sinnvollen Ergebnisses zumindest ein einem Filter zugewiesener Wichtungsfaktor in Filterverfahrensschritten unterschiedliche Werte aufweist. Die den Filtern Fi zugewiesenen Wichtungsfaktoren WFi können durch ein Anlernen eines neuronalen Netzes unter Anwendung der gängigen Lehre ermittelt werden. Im Unterschied zu Verfahren nach dem Stand der Technik, bei welchen Verfahren nach dem Stand der Technik Filter in einer aufwendigen Weise weggelassen werden, sind beim erfindungsgemäßen Verfahren nach der ersten und/oder der zweiten Variante in schalttechnischer Hinsicht sämtliche Filter vorhanden, wobei in einer effizienten Weise durch des Setzen des Wichtungsfaktors WFi gleich Null oder ungleich Null der jeweilige Filter FI keinen Einfluss beziehungsweise einen Einfluss auf die Ergebnisdaten des jeweiligen Filters hat.

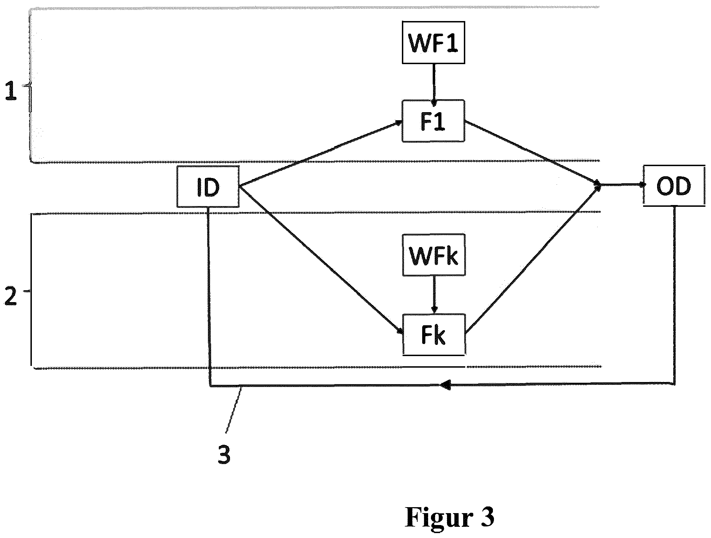

Figur 3 veranschaulicht eine weitere Ausführungsform des erfindungsgemäßen Verfahrens nach der ersten und/oder der zweiten und/oder der dritten Variante zur Verarbeitung von Daten in neuronalen Netzen. Es werden die Eingangsdaten ID unter Anwendung einer Anzahl von zumindest einem ein Filterkriterium definierenden Filter Fk (k=1, 2, 3,...) und unter Erstellung von Ergebnisdaten OD in Filterverfahrensschritten 1,2 analysiert,

wodurch die dem Filterkriterium entsprechenden und Ergebniswerte umfassende Ergebnisdaten OD erstellt werden, wobei jeweils einem Filter Fk ein Wichtungsfaktor WFk zugewiesen sein kann.

Das erfindungsgemäße Verfahren nach der ersten und/oder der zweiten und/oder der dritten Variante ist durch eine statische Anzahl von k Filtern geprägt. Das in Figur 3 dargestellte Verfahren ist - wie durch den Pfeil 2 dargestellt - durch Zurückführen der Ergebnisdaten OD als Eingangsdaten ID wiederholbar ausführbar. Es können insbesondere die sich wiederholenden Filterverfahrensschritte auf einem Rechenprozessor umfassend ASCI-Bausteine durchgeführt werden.

Das erfindungsgemäße Verfahren nach der ersten und/oder der zweiten und/oder der dritten Variante zeichnet sich dadurch aus, dass die Eingangsdaten ID in parallel ablaufenden Filterverfahrensschritten 1, 2 analysiert werden. Die Ergebnisdaten OD können in einer Ergebnismatrix zusammengefasst werden.

Durch ein Ruckführen der Ergebnisdaten OD des j-ten Verfahrensschrittes als Eingangsdaten ID des j+1-ten Verfahrensschrittes ist diese Ausführungsform des erfindungsgemäßen Verfahrens nach der ersten und/oder der zweiten und/oder der dritten Variante wiederholbar. Das erfindungsgemäße Verfahren nach der ersten und/oder der zweiten und/oder der dritten Variante gemäß Figur 3 kann den optionalen Schritt des Ablegens der Ergebnisdaten OD des j-ten Verfahrensschrittes in einem Speicher umfassen (in Figur 3 nicht dargestellt), bevor die Ergebnisdaten OD zur Durchführung des j+1-ten Verfahrensschrittes rückgeführt werden.

In Analogie zu der in der Figurenbeschreibung zu Figur 2 beschriebenen Ausführungsform ist auch bei der in Figur 3 dargestellten Ausführungsform des erfindungsgemäßen Verfahrens nach der ersten und/oder der zweiten und/oder der dritten Variante einem Filter Fk ein Wichtungsfaktor WFk (k=1, 2, 3...) zugewiesen, wodurch die in der Figurenbeschreibung zu Figur 2 und im allgemeinen Beschreibungsteil erwähnten Effekte und Vorteile erzielbar sind.

Zusammenfassend wird nochmals festgehalten, dass unter Aufrechterhaltung der statischen Anzahl von Filtern über die Wichtungsfaktoren ein Einschalten und Ausschalten der Filter erreicht wird. Das in Figur 3 dargestellte Verfahren zeichnet sich sohin dadurch aus, dass die Anzahl k der Filter konstant ist.

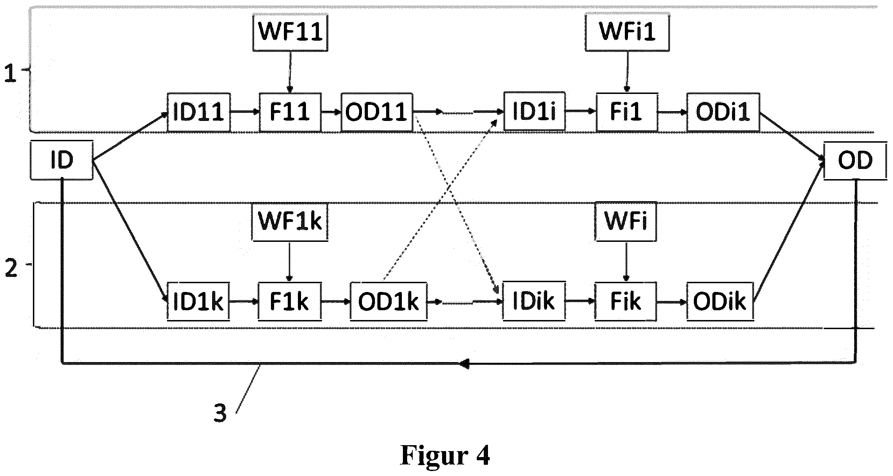

Figur 4 veranschaulicht die Kombination der ersten Ausführungsform und der zweiten Ausführungsform des erfindungsgemäßen Verfahrens nach der ersten und/oder der zweiten Variante. Die erste Ausführungsform und die zweite Ausführungsform sind wie oben anhand der Figurenbeschreibung zu der Figur 2 und zu der Figur 3 als getrennte, voneinander unabhängige Verfahren durchführbar.

Es werden - allgemein beschrieben - Eingangsdaten ID mittels ein Filterkriterium aufweisenden Filtern Ergebnisdaten OD erstellt, welche Ergebnisdaten OD dem Filterkriterium entsprechen. Das Verfahren kann durch ein Zurückführen der OD des j-ten Verfahrensschritt als Eingangsdaten des j+1-ten Verfahrensschritt wiederholbar.

Es werden die Eingangsdaten in parallel ablaufenden k Filterverfahrensschritten 1, 2 analysiert, wobei bei Durchführung des erfindungsgemäßen Verfahrens nach der ersten und/oder der zweiten Variante keinen statischen Wert annimmt. Die Filterverfahrensschritte 1, 2 umfassen eine Anzahl von i Filtern, wobei i einen statischen Wert aufweist. Das erfindungsgemäße Verfahren nach der ersten und/oder der zweiten Variante zeichnet sich dadurch aus, dass ein Filterverfahrensschritt 1, 2 in allen j Wiederholungen eines Filterverfahrensschrittes 1, 2 die gleiche Anzahl von i,k Filter (i,k=1, 2, 3...) aufweist.

In Analogie zu der in Figurenbeschreibung zu Figur 2 beschriebenen Ausführungsform des erfindungsgemäßen Verfahrens nach der ersten und/oder der zweiten Variante ist jedem Filter Fik (i,k=1, 2, 3 ... ) ein Wichtungsfaktor WFik (i,k=1, 2, 3...) zugewiesen, wobei durch die Wichtungsfaktoren Wik (i,k=1, 2, 3...) der Einfluss eines Filters Fik (i,k=1, 2, 3...) auf die Ergebnisdaten ODj des j-ten Verfahrensschrittes definierbar ist. Es kann einem Wichtungsfaktor Wik ein Wert Null oder ein Wert nahzu Null zugewiesen werden, sodass derjenige Filter Fik (i,k=1, 2, 3...) unter Aufrechterhaltung des betreffenden Filters Fik (i,k=1, 2, 3...) keinen Einfluss auf die Ergebnisdaten ODj des j-ten Verfahrensschrittes hat.

Die Wichtungsfaktoren Wik sind durch ein Anlernen eines neuronalen Netzes unter Anwendung der gängigen Lehre bestimmbar. Der Fachmann erkennt, dass zur Erlangung eines sinnvollen Ergebnisses zumindest ein einem Filter zugewiesener Wichtungsfaktor in Filterverfahrensschritten unterschiedliche Werte aufweist.

Durch die Wahl der Wichtungsfaktoren Wik, welche den Filtern Fik zugewiesen sind, gemäß der obigen Beschreibung gleich oder ungleich Null kann die Anzahl der Filter bei allen Wiederholungen der in Figur 4 dargestellten Ausführungsform des erfindungsgemäßen Verfahrens nach der ersten und/oder der zweiten Variante in den einzelnen Filterverfahrensschritten 1, 2 gleich bleiben. Ebenso kann die Anzahl der parallel ablaufenden Filterverfahrensschritte 1, 2 gleichbleiben. Das hier offenbarte Verfahren zur Analyse von Daten mittels neuronaler Netze ist wegen der vorteilhaften Starrheit der Anzahl der Filter Fik (i,k=1, 2, 3,...) auf starr strukturierten Rechenprozessoren durchführbar.

Der Fachmann kann die Dimension der Ergebnismatrix unter Anwendung von Reduktionsverfahren nach dem Stand der Technik reduzieren. Der Fachmann kann beispielsweise max-pooling-Verfahren, Verfahren mit Mittelwertbildung et cetera anwenden.

Die Figur 4 zeigt sehr vereinfachte Darstellung der Analyse von Daten mittels des erfindungsgemäßen Verfahrens nach der ersten und/oder der zweiten und/oder der dritten Variante. Es ist insbesondere die serielle und parallele Anordnung der Filter in Bezugnahme auf die Figur 2 und die Figur 3 sehr vereinfacht dargestellt. Der Fachmann weiß, dass Beziehungen außerhalb der parallel beziehungsweise seriell angeordneten Verfahrensschritten unter Verweis auf die gängigen Verfahren der CNN möglich sind. In Figur 4 ist dies anhand der strichlinierten Pfeile zwischen den parallelen Verfahrensschritten 1,2 dargestellt. Das in Figur 4 vereinfacht, schematisch dargestellte Verfahren ist unter Einbindung der gängigen Lehre der CNN erweiterbar.

Es ist in der obigen Figurenbeschreibung zu den Figuren 2, 3, 4 eine nicht näher definierte Anzahl i, k von Filtern erwähnt. Die bei der Verarbeitung von Eingangsdaten anwendbare Anzahl von Filtern wird durch die Eigenschaft des Rechenprozessors oder der Rechenprozessoren bestimmt.

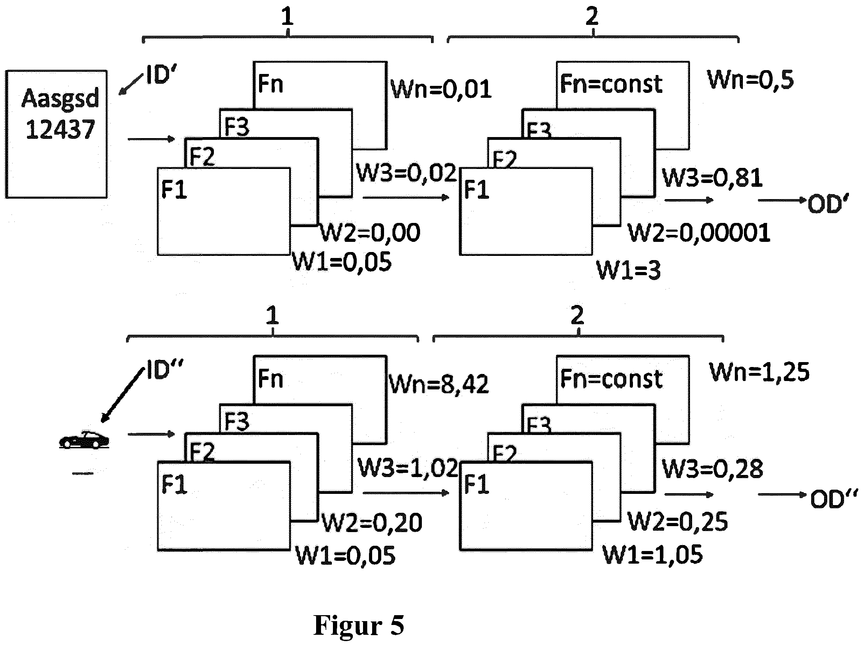

Figur 5 veranschaulicht die Analyse von Daten in einer durch die Anzahl der Filter vereinheitlichten Form.

Die Figur 5 umfasst eine Augenarzttafel umfassend Buchstaben und Zahlen als erste Eingangsdaten ID'. Der Inhalt der Augenarzttafel ist nicht weiter für die Diskussion der hier offenbarten Erfindung von Bedeutung, als dass die Augenarzttafel beispielsweise Buchstaben und Zahlen umfasst.

Die Figur 5 umfasst ein Bild eines Autos als zweite Eingangswerte ID2. Das Bild des Autos kann beispielsweise mittels einer Kamera eines weiteren Autos aufgenommen worden sein, welches weiteres Auto ein selbststeuerndes System umfasst. Gleichsam kann das als zweiter Eingangswert ID" in der Figur 2 gezeigte Bild des Autos ein Bild einer Überwachungskamera sein.

Wie in Figur 5 dargelegt werden die ersten Eingangsdaten mittels n Filtern in einem ersten Filterverfahrensschritt 1 analysiert. Die Anzahl der Filter ist vorgegeben (Die Zahl n ist konstant mit n=1, 2, 3....). Es ist jedem Filter ein Wichtungsfaktor zugewiesen, wobei jeder Wichtungsfaktor einen Wichtungsfaktorwert zur Analyse der ersten Eingangsdaten aufweist.

Der dem ersten Filter F2 zugewiesene erste Wichtungsfaktor W1 weist beispielsweise einen Wichtungsfaktorwert W1=0,05 auf.

Der dem zweiten Filter F2 zugewiesene zweite Wichtungsfaktorwert W2 weist einen Wichtungsfaktorwert W2=0,0 auf. Durch das Setzen des zweiten Wichtungsfaktorwertes W2 gleich Null wird bei der Analyse der Augenarzttafel im ersten Filterverfahrensschritt 1 der Einfluss des zweiten Filters F2 auf das hierbei erzielte Ergebnis unterbunden.

Bei dem zweiten Filterverfahrensschritt wird wiederum eine Anzahl von n Filtern angewandt. Die Anzahl der n Filter, welche n Filter im ersten Filterverfahrensschritt 1 angewandt werden, entspricht der Anzahl der n Filter, welche im zweiten Filterverfahrensschritt 2 angewandt werden.

Es wird auch im zweiten Filterverfahrensschritt 2 der Einfluss der Filter Fn (n=konst, n=1, 2, 3...) durch die Wichtungsfaktoren bestimmt, wobei einem Filter Fn ein Wichtungsfaktor zugewiesen ist. Der dem zweiten Filter F2 zugewiesene Wichtungsfaktor W2 umfasst einen Wichtungsfaktorwert W2=00001, welcher zweite Wichtungsfaktorwert im Rahmen der Analyse der Augenarzttafel einen Wert gleich nahezu Null aufweist. Der zweite Filter F2 des zweiten Filterverfahrensschrittes weist sohin bei der Analyse der Augenarzttafel als erste Eingangsdaten ID' keinen wesentlichen Einfluss auf.

Der erste Filterverfahrensschritt 1 und der zweite Filterverfahrensschritt 2 können bei der in Figur 5 dargestellten Anwendung des erfindungsgemäßen Verfahrens nach der ersten und/oder zweiten Variante mittels eines Rechenprozessors umfassend einen ASIC-Bauteil durchgeführt werden. Dies schließt nicht aus, dass dieses Verfahren auch mit einem anderen Rechenprozessor durchgeführt wird. Es kann weiters die Analyse im ersten Filterverfahrensschritt 1 mit einem ersten Rechenprozessor und die Analyse im zweiten Filterverfahrensschritt 2 mit einem zweiten Rechenprozessor durchgeführt werden.

Die Figur 5 veranschaulicht weiters die Analyse von Bilddaten als zweite Eingangswerte ID", welche zweite Eingangsdaten ID" durch eine andere Vorrichtung gewonnen werden und welche zweite Eingangsdaten ID" eine grundsätzlich andere Situation beschreiben.

Das erfindungsgemäße Verfahren nach der ersten und/oder der zweiten und/oder der dritten Variante kann sich dadurch auszeichnen, dass die konstante Anzahl n der Filter zur Analyse der ersten Eingangswerte ID' der konstanten Anzahl n von Filtern zur Analyse der zweiten Eingangswerte ID" entspricht. Dies ist möglich, da der Einfluss der Filter auf die Ergebnisdaten über die den Filtern zugewiesenen Wichtungsfaktoren bei Durchführung des erfindungsgemäßen Verfahrens nach der ersten und/oder der zweiten und/oder der dritten Variante gesteuert wird.

Der Fachmann das in Figur 5 dargestellte Verfahren um die nach dem Stand der Technik bekannten, bei der Verarbeitung von Daten nach der gängigen Teilverfahren einer mathematischen Faltung und/oder einem Teilverfahren zur Reduzierung der Datenmenge ("subsampling") und/oder einem Teilverfahren zum Verwerfen überflüssiger Information ("pooling") und/oder einem Teilverfahren zur Klassifizierung ("fully-connected layer") kombinieren.

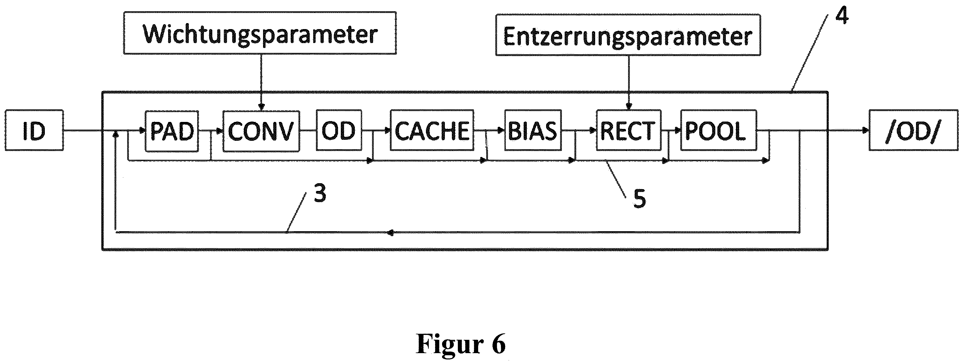

Die Figur 6 veranschaulicht eine weitere Ausführungsform des erfindungsgemäßen Verfahrens nach der ersten und/oder der zweiten und/oder der dritten Variante, wobei das erfindungsgemäße Verfahren nach der ersten und/oder der zweiten und/oder der dritten Variante um zumindest einen weiteren Verfahrensschritt ergänzt ist. Der zumindest eine weitere Verfahrensschritt kann aus der Gruppe der im Folgenden beschriebenen und nach dem Stand der Technik bekannten, mit nach dem Stand der Technik bekannten Methoden neuronaler Netze kombinierbaren weiteren Verfahrensschritten Padding PAD, Pufferspeicherung CACHE, Entzerrung BIAS, Rektifizierung RECT (Anwendung einer nichtlinearen Aktivierungsfunktion) und Pooling POOL ausgewählt werden. Das Weglassen eines ausgewählten weiteren Verfahrensschrittes hat keinen Einfluss auf die durch die anderen weiteren Verfahrensschritte erzielbaren Wirkungen. Das Weglassen eines ausgewählten weiteren Verfahrensschrittes hat lediglich einen Einfluss auf die Ergebnisdaten. Die erwähnten weiteren Verfahrensschritte sind sohin in einer beliebigen Weise kombinierbar. Letzteres ist in Figur 6 nicht dargestellt; Figur 6 veranschaulicht eine mögliche Ergänzung des diskutierten erfindungsgemäßen Verfahrens nach der ersten und/oder der zweiten und/oder der dritten Variante mit den weiteren Verfahrensschritten.

Die Kombination der weiteren Verfahrensschritte mit dem erfindungsgemäßen Verfahren nach der ersten und/oder der zweiten Variante hat die besondere Wirkung, dass eine Ausführungsform eines Verfahrens umfassend das erfindungsgemäße Verfahren nach der ersten und/oder der zweiten Variante und die weiteren Verfahrensschritte ohne Zwischenspeicherung von ermittelten Werten durchführbar ist. Dies wird durch die konstante Anzahl der Filter erreicht. In Hinblick auf die verwendete Recheneinheit erlaubt die konstante Anzahl der Filter die fest definierte Verschaltung der in der Recheneinheit durchgeführten Logik.

Der Fachmann ist weiters in der Lage, das erfindungsgemäße Verfahren nach der ersten und/oder der zweiten und/oder der dritten Variante auch mit weiteren, hier nicht angeführten Verfahrensschritten zu kombinieren.

Es sind in Figur 6 das erfindungsgemäße Verfahren nach der ersten und/oder der zweiten Variante und die weiteren Verfahrensschritte mittels des Rechteckes 4 zusammengefasst, welches erfindungsgemäße Verfahren nach der ersten und/oder der zweiten Variante und welche weiteren Verfahrensschritte bei Auswahl aller weiteren Verfahrensschritte vorzugsweise auf einer Recheneinheit ausgeführt werden.

Die Eingangsdaten ID können vorgegebene Daten und/oder durch einen Sensor ermittelbare Daten sein. Die Herkunft der Daten hat keinen Einfluss auf die Durchführung des in Figur 6 veranschaulichten Verfahrens. Lediglich zur Erleichterung des Verständnisses der folgenden Beschreibung und in somit keinesfalls einschränkender Weise wird angenommen, dass die Eingangsdaten ID mittels eines Bildsensors ermittelt werden und unter Berücksichtigung der hier nicht behandelten Eigenschaften des Schwarz/Weiß-Bildsensors das Matrixformat 640x480 aufweisen.

Die Eingangsdaten ID werden dem Padding-Verfahrensschritt PAD als weiterer Verfahrensschritt zugeführt.

Die Eingangsdaten ID werden einem so genannten Verfahrensschritt CONV zugeführt, in welchem Verfahrensschritt CONV die eingehenden Daten ID unter Anwendung der Lehre der CNN mit einer konstanten Anzahl von Filtern nach der obigen Beschreibung und somit unter Anwendung des oben beschriebenen erfindungsgemäßen Verfahrens nach der ersten und/oder der zweiten Variante verarbeitet werden.

Die Wichtungsfaktoren können dem den Verfahrensschritt CONV ausführenden Rechenprozessor zugeführt werden. Die Wichtungsfaktoren sind hierzu in einem persistenten Speicher gespeichert. Die Anordnung des Speichers zur Speicherung der Wichtungsfaktoren hat an sich an keinen Einfluss auf die Durchführung des in Figur 6 dargestellten oder des erfindungsgemäßen Verfahrens nach der ersten und/oder der zweiten Variante. Die Anordnung des Speichers ist lediglich eine mit der Gestaltung der Bauteile verbundene Aufgabe.

Die Ergebniswerte OD weisen das Format 640x480x4 (die Eingangsdaten ID sind ein Grauwertbild) auf, wenn im Convolutional Layer CONV beispielsweise vier Filter zur Verarbeitung der Daten eingesetzt werden. In hierzu analoger Weise können die Ergebniswerte OD das Format 640x480x16 (die Eingangsdaten ID sind ein Grauwertbild) bei einer Verwendung von sechzehn Filtern aufweisen.

Das beispielhaft angegebene Format der Ergebniswerte ist unabhängig von den Wichtungsfaktoren. Weist ein Wichtungsfaktor den Wert Null auf, so betragen die mittels dieses Wichtungsfaktors errechneten Ergebniswerte Null. Es ist sohin lediglich der Inhalt der Ergebnisdaten OD abhängig von den Wichtungsfaktoren.

Die Ergebnisdaten OD werden einem Pufferspeicher CACHE zugeführt, welcher Pufferspeicher CACHE nach dem Stand der Technik in der Logik der Recheneinheit ausgebildet ist. Im Pufferspeicher werden die eingehenden Ergebnisdaten OD nach Verfahren nach dem Stand der Technik aufsummiert. Der Pufferspeicher CACHE ist vorzugsweise kein RAM-Speicher, was unter Verweis auf die gängige Lehre möglich, jedoch in Hinblick auf das hier diskutierte Verfahren weniger vorteilhaft wäre. Unter Anwendung von Verfahren nach dem Stand der Technik und unter Bezugnahme auf das oben erwähnte Beispiel werden die Ergebnisdaten 640x480x4 zu einem Matrixformat 640x480x1 aufsummiert.

Die aufsummierten Daten werden vom Pufferspeicher CACHE einem Entzerrungsschritt BIAS, in welchem Entzerrungsschritt BIAS die Daten unter Anwendung der gängigen Lehre entzerrt werden, anschließend einem Rektifizierungsverfahrensschritt RECT und abschließend einem Pooling-Verfahrensschritt POOL zugeführt. Die Verfahrensschritte CACHE, BIAS, RECT, POOL sind nach dem Stand der Technik bekannt.

Die Entzerrungsparameter zur Durchführung des Entzerrungsschrittes können außerhalb der durch das Rechteck 4 symbolisierten Recheneinheit abgespeichert sein. Das Rektifizierungsverfahren ist nach der gängigen Lehre auch als Aktivierung bekannt, bei welchem Rektifizierungsverfahren oder bei welcher Aktivierung nach dem Stand der Technik bekannte Verfahren wie beispielsweise das Relu-Verfahren angewandt wird.

Die weiteren Ergebniswerte /OD/ sind definiert als die Ergebniswerte, welche Ergebniswerte aus dem Ergebniswert OD aus der Verarbeitung der Daten unter Anwendung der CNN-Lehre mit einer konstanten Anzahl von Filtern - sohin unter Anwendung des oben beschriebenen erfindungsgemäßen Verfahrens nach der ersten und/oder der zweiten Variante - und der Anwendung eines weiteren Verfahrensschrittes aus der Gruppe der Verfahrensschritte CACHE, BIAS, RECT, POOL ermittelt werden.

Das erfindungsgemäße Verfahren nach der ersten und/oder der zweiten und/oder der dritten Variante und die weiteren Verfahrensschritte, welche durch das Rechteck 4 zusammengefasst sind, sind i-fach wiederholbar (i=1,2,3...) , wie dies durch den die Rückführung der Daten symbolisierenden Pfeil 3 dargestellt ist. Es ist auch denkbar, dass die weiteren Ergebniswerte /OD/ einer weiteren Recheneinheit umfassend das erfindungsgemäße Verfahren nach der ersten und/oder der zweiten und/oder der dritten Variante und zumindest einem weiteren Verfahrensschritt zugeführt werden, was in Figur 6 nicht dargestellt ist.

Das erfindungsgemäße Verfahren nach der ersten und/oder der zweiten Variante - in Figur 6 durch den Verfahrensschritt CONV dargestellt - und die weiteren Verfahrensschritte CACHE, BIAS, RECT, POOL werden vorzugsweise auf einer Recheneinheit ausgeführt. Zur Auswahl zumindest eines weiteren Verfahrensschrittes und das Nichtdurchführen oder Weglassen anderer weiterer Verfahrensschritte sowie das Durchführen/Nichtdurchführen des oben beschriebenen erfindungsgemäßen Verfahrens nach der ersten und/oder der zweiten Variante in einem i-ten Verfahrensschritt umfasst die Recheneinheit eine entsprechende Schaltung 5. Der Fachmann ist zweifelsfrei in der Lage eine solche Recheneinheit mit einer derartigen Schaltung 5 zu konzipieren. Die Schaltung 5 gestattet weiters, dass Ergebniswerte unter Weglassen eines weiteren Verfahrensschrittes ausgelesen werden können.

Die durch den weiteren Verfahrensschritt CACHE durchgeführte Aufsummierung der aus dem erfindungsgemäßen Verfahren nach der ersten und/oder der zweiten Variante erhaltenen Ergebniswerte OD bewirkt, dass der erforderliche Speicher reduziert werden kann.

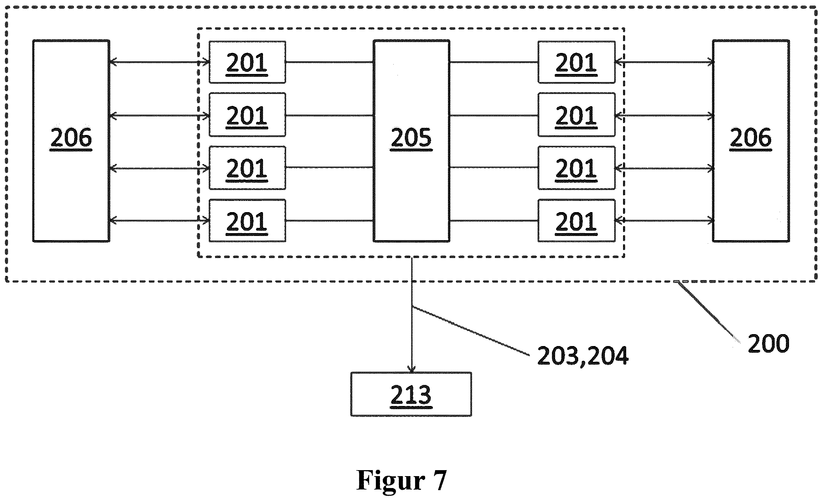

Figur 7 zeigt einen erfindungsgemäßen Logikbaustein 200, insbesondere ASIC, in welchem elektronische Schaltungsanordnungen zum Durchführen neuronaler Netzwerkberechnungen für ein neuronales Netzwerk 100 mit einer Vielzahl von ersten Schichten 101, insbesondere zur Durchführung eines erfindungsgemäßen Verfahrens fest vorgegeben (d. h. nach Herstellung des Logikbausteins unveränderlich) sind.

Der Logikbaustein 200 weist einen Signalinput 203 zum Zuführen von Input (beispielsweise von einer externen CPU 213) für das neuronale Netzwerk 100 und einen Signaloutput 204 zur Abgabe von Output des neuronalen Netzwerks 100 auf.

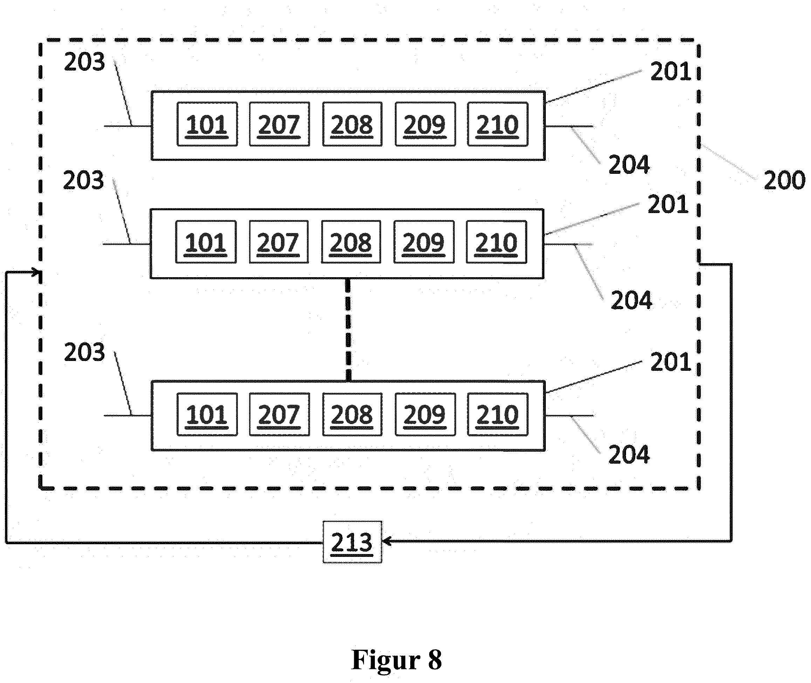

Es ist eine Vielzahl (hier beispielhaft sechs) von jeweils eine erste Schicht 101 des neuronalen Netzwerks 100 repräsentierenden erste Schicht-Schaltungsanordnungen 201 vorgesehen, wobei jede erste Schicht-Schaltungsanordnung 201 wenigstens einen Signaleingang zum Erhalt von Eingangsdaten und wenigstens einen Signalausgang zur Abgabe von Ergebnisdaten aufweist und wobei jede erste Schicht-Schaltungsanordnung 201 wenigstens eine erste Schicht 101 aufweist (vgl. Figur 8), in welcher jeweils in einem oder mehreren Kanälen aus eine Eingangsdatengröße pro Kanal aufweisenden Eingangsdaten unter Verwendung einer Anzahl von der wenigstens einen ersten Schicht 101 zugeordneten Filtern 105 durch lineare Rechenoperationen eine Anzahl von Ergebnisdaten erzeugbar ist, wobei rezeptive Felder der der wenigstens einen ersten Schicht 101 zugeordneten Filter 105 kleiner sind als die Eingangsdatengröße pro Kanal der wenigstens einen ersten Schicht 101, und wobei die Filter 105 die lineare Rechenoperation jeweils pro Kanal an unterschiedlichen Stellen der Eingangsdaten durchführen.

Alle ersten Schicht-Schaltungsanordnungen 201 weisen dieselbe Anzahl von Filtern 105, welche der wenigstens einen ersten Schicht 101 zugeordnet sind, auf und in jeder der wenigstens einen ersten Schichten 101 jeder ersten Schicht-Schaltungsanordnung 201 wird jeder der einer jeweiligen ersten Schicht 101 zugeordneten Filter 105 für lineare Rechenoperationen verwendet.

Jedem Filter 105 ist ein Wichtungsfaktor zugeordnet ist, welcher festlegt, in welchem Ausmaß das Ergebnis der durch den jeweiligen Filter 105 an den unterschiedlichen Stellen der Eingangsdaten durchgeführten Rechenoperationen bei der Erzeugung der Ergebnisdaten berücksichtigt wird.

Der Logikbaustein 200 weist eine Output-Schaltungsanordnung auf (nicht dargestellt), welche mit dem Signaloutput 204 verbunden ist.

Eine Scheduler-Schaltungsanordnung 205, welche mit der Vielzahl von ersten Schicht-Schaltungsanordnungen 201 in Datenverbindung steht ist zur Definition einer Netzarchitektur des neuronalen Netzwerks 100 dazu ausgebildet, gemäß einer änderbaren Vorgabe festzulegen, in welcher Reihenfolge ein Datenfluss vom Signalinput 203 des Logikbaustein 200 zu den einzelnen ersten Schicht-Schaltungsanordnungen 201, zwischen den einzelnen ersten Schicht-Schaltungsanordnungen 201 und von den einzelnen ersten Schicht-Schaltungsanordnungen 201 zur Output-Schaltungsanordnung erfolgt.

Beispielhaft sind in Figur 7 zwei zweite Schicht-Schaltungsanordnungen 202 dargestellt, welche dicht miteinander verbunden sind und von denen eine mit einer Output-Schaltungsanordnung verbunden oder als solche ausgebildet sein kann.

Das Ergebnis der Netzwerkberechnungen ist einer externen CPU 213 zuführbar.

Figur 8 zeigt für den in Figur 7 dargestellten Logikbaustein 200 beispielhaft den Aufbau der verschiedenen ersten Schicht-Schaltungsanordnungen 201 im Detail.

Hier ist jede erste Schicht-Schaltungsanordnung 201 gleich aufgebaut. Insbesondere weist natürlich jede erste Schicht-Schaltungsanordnung 201 (genauer: die in ihr enthaltene erste Schicht 101) dieselbe Anzahl von Filtern 105 auf wie alle anderen ersten Schicht-Schaltungsanordnungen 201.

Jede erste Schicht-Schaltungsanordnung weist einen Signaleingang 203 und einen Signalausgang 204 auf. Durch die hier nicht dargestellte Scheduler-Schaltungsanordnung 205 kann festgelegt werden, wie die Signaleingänge 203 und die Signalausgänge 204 der einzelnen ersten Schicht-Schaltungsanordnungen 204 miteinander verbunden werden.

Jede erste Schicht-Schaltungsanordnung 201 repräsentiert eine erste Schicht 101 des neuronalen Netzwerks 100 in dem Sinn als jede erste Schicht-Schaltungsanordnung 201 im Betrieb deren Funktionalität aufweist.

Beispielhaft dargestellt sind verschiedene, hier vorhandene (an sich bekannte, weil dem Stand der Technik entsprechende Funktionsbausteine):

- einen Cache-Speicheranordnung 207
- einen Bias-Baustein 208 zum Entfernen eines ggf. vorhandenen Bias
- einen Rektifizier-Baustein 209 zum Durchführen eines Rektifiziervorgangs (auch als Anwendung einer nichtlinearen Aktivierungsfunktion bekannt)
- einen Pooling-Baustein 210 zum Durchführen eines Pooling- und/oder Downsampling-Verfahrens
- einen Padding-Baustein 211 zur Durchführung eines Padding-Verfahrens

Es müssen nicht in jeder ersten Schicht-Schaltungsanordnung 201 stets alle Funktionsbausteine zur Anwendung kommen, vielmehr kann für jede der ersten Schichten-Schaltungsanordnungen 201 festgelegt werden, welche Funktionsbausteine in ihr zur Anwendung kommen. Dies kann bevorzugt durch die Scheduler-Schaltungsanordnung 205 erfolgen.

Es kann vorgesehen sein, dass durch die Scheduler-Schaltungsanordnung 205 eine Netzarchitektur so definiert ist, dass von wenigstens einem Funktionsbaustein einer ersten Schicht-Schaltungsanordnung 201 ein Datenfluss direkt zu wenigstens einem Funktionsbaustein einer anderen ersten Schicht-Schaltungsanordnung 201 erfolgt.

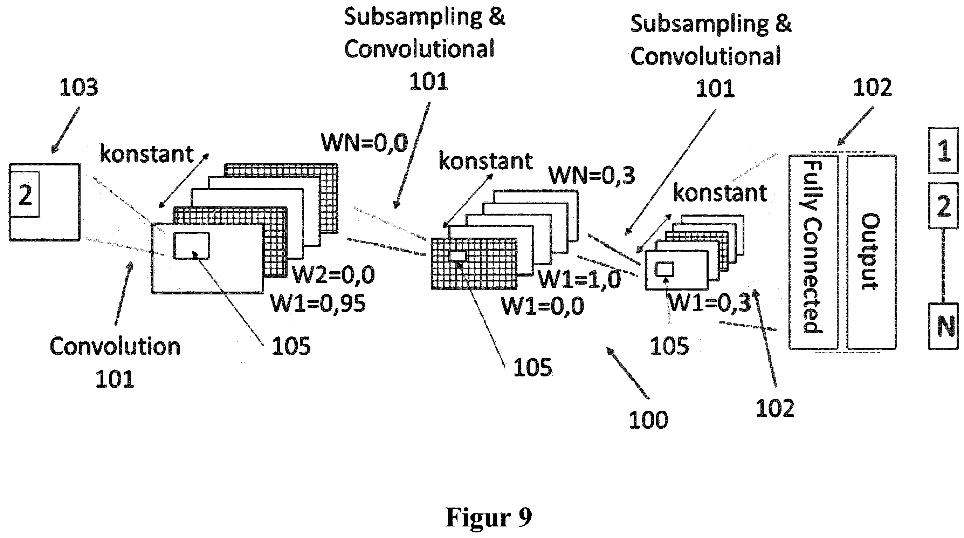

Figur 9 zeigt eine mögliche Architektur eines trainierten neuronalen Netzwerks 100 im Inferenzbetrieb in Form eines CNN, durch welches ein Verfahren nach der zweiten Variante der Erfindung ausführbar ist und welches in einem erfindungsgemäßen Logikbaustein 200 fest abgelegt sein kann.

Das neuronale Netzwerk 100 weist eine Inputschicht 103 auf, über welche dem neuronalen Netzwerk 100 ein Input (hier beispielhaft die Zahl Zwei) zuführbar ist. Es sind beispielhaft drei erste Schichten 101 vorgesehen, in welchen mittels Filtern 105 durch Faltungen Ergebnisdaten berechnet und jeweils einer nachfolgenden Schicht 101, 102 zugeführt werden. Von Bedeutung für die Erfindung ist, dass jede erste Schicht 101 dieselbe Anzahl an Filtern 105 aufweist (hier z. B. fünf Filter 105) und alle der Filter 105 in jeder ersten Schicht 101 auch zur Anwendung kommen. In diesem Beispiel hat das Training des neuronalen Netzwerks 100 ergeben, dass in der ganz links dargestellten ersten Schicht 101 die Ergebnisse der Rechenoperationen zweier Filter 105 bei der Erzeugung der Ergebnisdaten nicht berücksichtigt werden (ihre Wichtungsfaktoren sind gleich Null), während bei der in der Mitte und rechts dargestellten ersten Schicht 101 jeweils ein Filter 105 zwar zur Anwendung kommt, allerdings ohne Einfluss auf die Erzeugung der Ergebnisdaten zu haben. Das Training des neuronalen Netzwerks 100 hat auch ergeben, dass die Ergebnisse der Rechenoperationen jener Filter 105, deren Wichtungsfaktoren ungleich Null sind, unterschiedlich gewertet werden, was sich durch die beispielhaft gegebenen unterschiedlichen numerischen Werte der Wichtungsfaktoren ergibt.

In jeder ersten Schicht 101 wird eine nichtlineare Aktivierungsfunktion zur Erzeugung von Ergebnisdaten in Form von Aktivierungsdaten angewandt (dieser auch als Rektifiziervorgang bekannte Vorgang ist nicht dargestellt, weil ohnehin dem Stand der Technik entsprechend).

Die Ergebnisdaten (genauer: Ergebnisdaten in Form von Aktivierungsdaten) der rechentechnisch betrachtet letzten ersten Schicht 101 werden zwei dicht verbundenen zweiten Schichten 102 zugeführt, von denen die rechts dargestellte zweite Schicht 102 als Outputschicht 104 ausgebildet ist.

Abgesehen von der konstanten Anzahl von Filtern 105 in den einzelnen ersten Schichten 101 entspricht das in Figur 9 dargestellte neuronale Netzwerk 100 dem Stand der Technik.

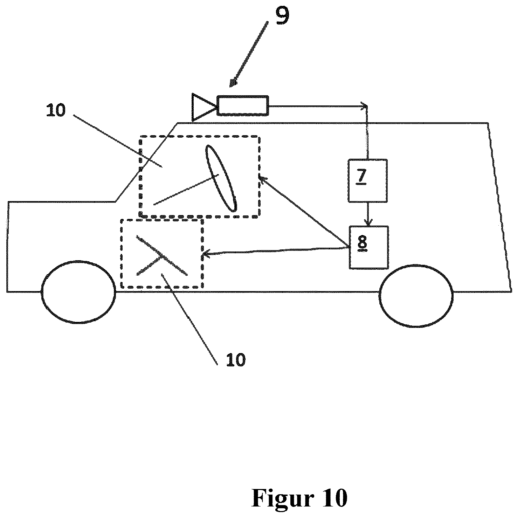

Figur 10 zeigt eine erfindungsgemäße Vorrichtung 6 in Form eines Fahrzeugs mit wenigstens einem erfindungsgemäßen Logikbaustein 200, wobei dem wenigstens einen Logikbaustein 200 über zumindest einen Signalinput 203 durch zumindest eine am oder im Fahrzeug angeordnete Signalerzeugungsvorrichtung 9 Signale als Input für die neuronalen Netzwerkberechnungen zuführbar sind und wobei der wenigstens eine Logikbaustein 200 über zumindest einen Signaloutput 204 zur Kommunikation mit einer Steuer- oder Regelvorrichtung 8 des Fahrzeugs oder zur Abgabe von Steuerbefehlen an wenigstens einen Aktor 10 des Fahrzeugs (nicht dargestellt) aufweist.

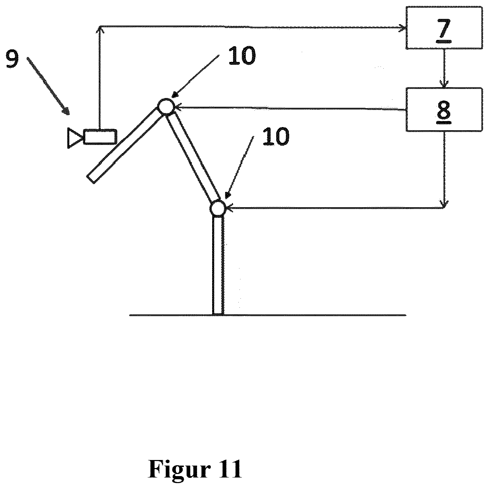

Figur 11 zeigt eine erfindungsgemäße Vorrichtung 6 in Form eines Roboters mit wenigstens einem erfindungsgemäßen Logikbaustein 200, wobei dem wenigstens einen Logikbaustein 200 über zumindest einen Signalinput 203 durch zumindest eine am oder im Roboter angeordnete Signalerzeugungsvorrichtung 9 Signale als Input für die neuronalen Netzwerkberechnungen zuführbar sind und wobei der wenigstens eine Logikbaustein 200 über zumindest einen Signaloutput 204 zur Kommunikation mit einer Steuer- oder Regelvorrichtung 8 des Roboters oder zur Abgabe von Steuerbefehlen an wenigstens einen Aktor 10 (z. B. Stellmotor oder Manipulationsvorrichtung) des Roboters (nicht dargestellt) aufweist.

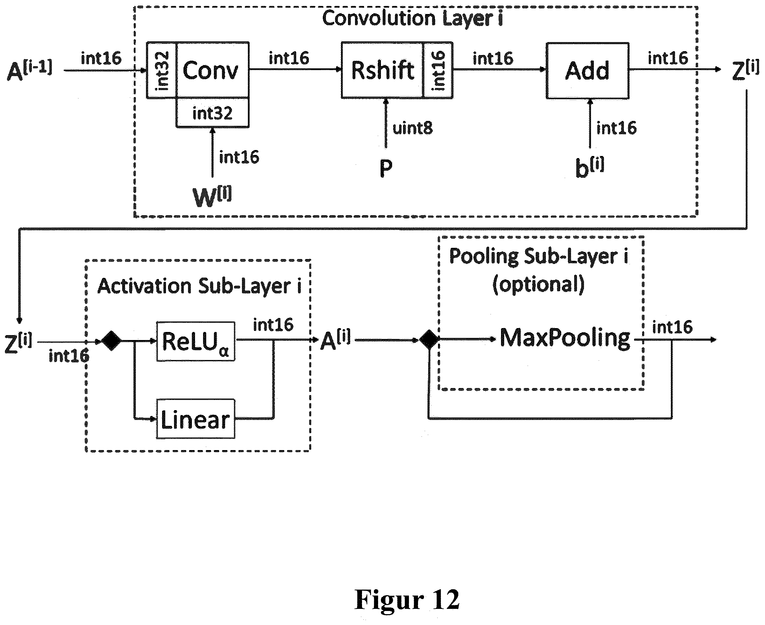

Die Figuren 12 bis 14 zeigen ein Verfahren nach der dritten Variante der Erfindung, bei welchem eine Aktivierungskompression (hier in Kombination mit einer Quantisierung des neuronalen Netzwerks 100) zur Anwendung kommt. Das neuronale Netzwerk 100 kommt beispielhaft im Gebiet der Computer Vision mit Klassifizierung von Objekten in einem Bild oder Videostream zum Einsatz.

Figur 12 zeigt eine i-te erste Schicht 101 eines neuronalen Netzwerks 100, mit einer Convolutional Layer CONV, einer Rektifizierungsschicht RECT (in welcher die nichtlineare Aktivierungsfunktion angewandt wird) und einer optionalen Pooling-Schicht POOL. Im Folgenden werden die vorkommenden Matrizen und Operatoren erklärt:

Matrizen:

Es wird mit $A^{[i-1]}$ bzw. $A^{[i]}$ die Gesamtheit der Aktivierungsergebnisdaten (Activation Map) der vorherigen (i-1-ten) Schicht 101 bzw. der vorliegenden (i-ten) Schicht 101 bezeichnet, welche hier im Datenformat int16 vorliegt ($A^{[0]}$ entspricht der RGB-Matrix des Eingangsbildes). Entsprechend wird mit $E^{[i-1]}$ bzw. $E^{[i]}$ die Gesamtheit der Ergebnisdaten (Feature Map) der vorherigen (i-1-ten) Schicht 101 bzw. der vorliegenden (i-ten) Schicht 101 bezeichnet

Der Parameter P (eine natürliche Zahl) bezeichnet einen Skalisierungsexponenten für eine Quantisierung,

$$X^{[i]}_{int} = cast_{int}\left(X_{float} \cdot 2^P\right)$$

welche gemäß der Formel (*Gl.* 1) erfolgt. Bevorzugt ist ein Wert von P = 8. Eine Gewichtsmatrix der Faltungsoperation, deren Einträge Wichtungsfaktoren darstellen, wird mit $W^{[i]}$ bezeichnet, welche gemäß Gl. 1 quantisiert wird.

Ein Biasvektor der Faltung wird mit $b^{[i]}$ bezeichnet, die Quantisierung erfolgt gemäß Gl. 1.

Operatoren:

Der Operator "Rshift" stellt einen Bitshifter dar, da nach Faltung der quantisierten Matrizen ($A^{[i-1]} * W^{[i]}$) eine Normalisierung erforderlich ist, bei welcher das Ergebnis um P Stellen nach rechts verschoben wird, wie nachstehende Gleichung zeigt: $norm(A^{[i-1]} * W^{[i]}) = Rshift(A^{[i-1]} * W^{[i]})$ (Gl. 2).

Die Operation "Add" addiert den Biasvektor. Die Funktion $ReLU_\alpha$ stellt die nichtlineare Aktivierungsfunktion dar, wobei $\alpha = 0$ die ReLU-Funktion ergibt und $\alpha \neq 0$ eine LReLU-Funktion.

"Linear" bezeichnet eine optionale lineare Aktivierungsfunktion.

"MaxPooling" bezeichnet einen hier beispielhaft als MaxPooling ausgeführten Pooling-Operator.

Die Casting-Funktion "cast" castet den Eingang auf die angegebene Bitbreite, z. B. $cast_{int32}(0539)$ = 00000539 oder $cast_{int32}(FAC6)$ = FFFFFAC7.

Mit dem "Activation Clipper" (Clipping Function) wird der Wertebereich der Aktivierungsergebnisdaten von einem ersten Bildbereich B 1 auf eine echte Teilmenge in Form eines zweiten Bildbereichs B2 eingeschränkt, wobei die verwendete "Clipping Function" wie folgt definiert sein kann (Gl. 3):

$$\text{clip}(x, L, U) = \begin{cases} x, & x \in [L, U] \\ L, & x < L \\ U, & x > U \end{cases}$$

$A_{clip}$ = [clip ($a_k$, $L$, $U$))], $\forall a_k \in A^{[i]}$ (Activation Map)

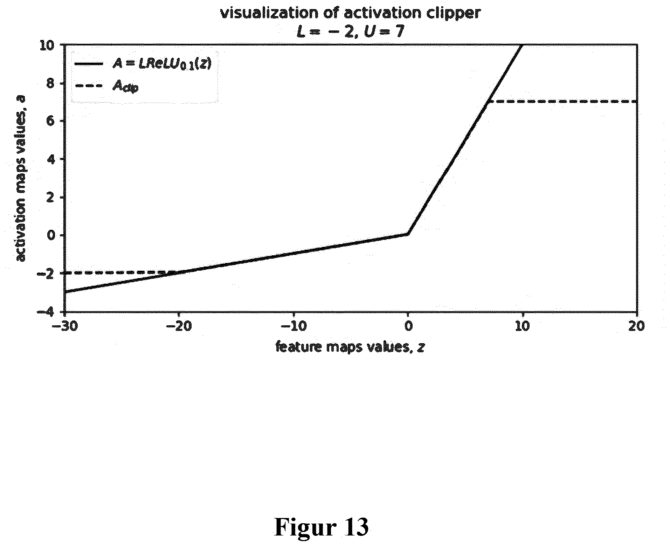

Figur 13 zeigt ein Beispiel für eine nichtlineare Aktivierungsfunktion in Form von $LReLU_{0,1}(z)$, welche mit den Parametern mit L = -2 und U = 7 geclippt wurde. Optimale Werte sind z. B. (in Gleitzahl-Arithmetik): $L_{float}$ = -2 und $U_{float}$

= 14 - $2^{-4}$ = 13,9375, weil damit die vollständige Bitbreite des Datentyps uint8 verwendet wird. Skalierung auf eine Ganzzahl-Arithmetik ergibt z. B. $L = cast_{int16}(L_{float} \cdot 2^P)$ = -512 und $cast_{int16}(U_{float} \cdot 2^P)$ = 3568.

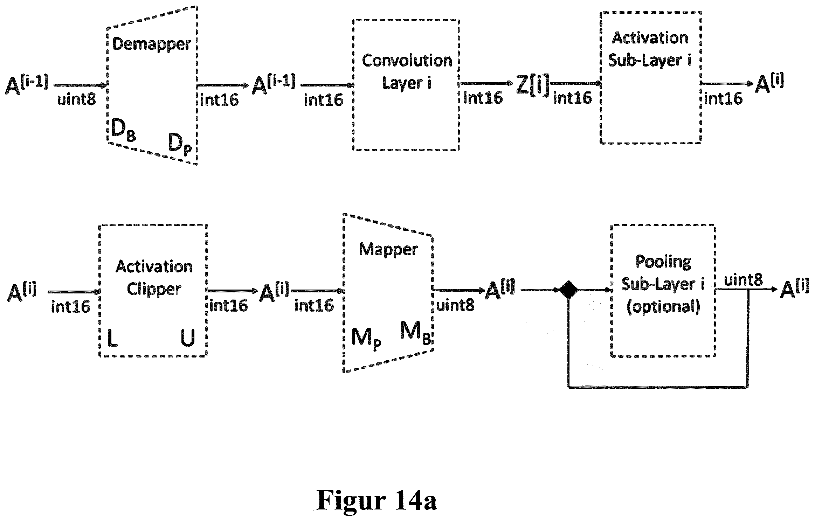

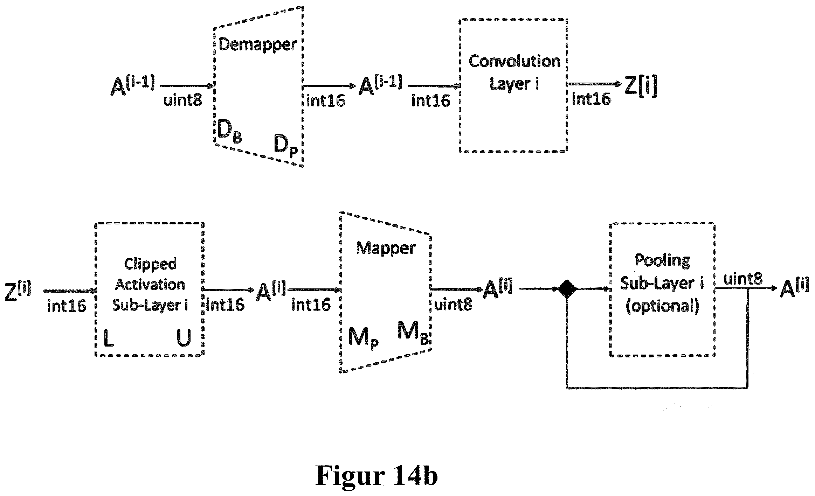

Die Ausführungsbeispiele der Figuren 14a und 14b unterscheiden sich von jenem der Figur 12 dadurch, dass optionale zusätzliche Mapping- und Demapping-Verfahren gezeigt sind. Im Ausführungsbeispiel der Figur 14a ist das Clippen als vom Aktivieren gesonderter Schritt vorgesehen. Im Ausführungsbeispiel der Figur 14b erfolgt hingegen das Aktivieren mit einer geclippten Aktivierungsfunktion (in einem einzigen Schritt).

Der Mapping Operator bildet die geclipten Werte $A_{clip}$ der Aktivierungsergebnisdaten auf den Datentyp uint8 (mit Wertebereich [0, 255]) ab. In einem ersten Schritt wird zunächst ein Mapping Bias $M_B$ zu $A_{clip}$ gezählt, welcher so gewählt ist, dass der minnimale Wert der geclipten Aktivierungsergebnisdaten auf 0 abgebildet wird (also $M_B = -L$). In einem zweiten Schritt wird die Matrix $A_{clip} + M_B$ entsprechend der Mapping Power $M_P$ nach rechts verschoben, wobei gilt (Gl. 4):

$$M_P \geq \left\lceil \operatorname{ld}\left(\frac{U + |M_B|}{255}\right)\right\rceil$$

Für obiges Beispiel mit L = -512 und U = 3568 ergibt sich z. B. $M_P$ = 4.

Der Mapper lässt sich wie folgt zusammenfassen:

$$A_{\mathrm{map}} = [\operatorname{map}(a_k, M_B, M_P)] = [\operatorname{Rshift}(a_k + M_B, M_P)],$$

$\forall a_k \in A_{\mathrm{clip}}$

$$A_{\mathrm{uint8}} = \operatorname{cast}_{\mathrm{uint8}}(A_{\mathrm{map}}).$$

Nach Durchlaufen der i-1-ten ersten Schicht 101 werden die uint8 Activation Maps $A^{[i-1]}_{uint8}$ in den Speicher geschrieben und für die i-te Schicht 101 ausgelesen. Für die Ausführung der linearen Rechenoperation (hier: Faltung) wird $A^{[i-1]}_{uint8}$ zurück auf den Datentyp int16 abgebildet (Demapping, Dekompression). Analog zu der Mapping Operation werden bei dem Demappingverfahren zwei Parameter benötigt: Demapping Power $D_P$ und Demapping Bias $D_B$. Damit lässt sich die Demapping Abbildungsfunktion wie folgt definieren:

$$A_{\mathrm{demap}} = [\operatorname{demap}(a_k, D_B, D_P))] = [\operatorname{Lshift}(a_k, D_P) - D_B)],$$

$\forall a_k \in \operatorname{cast}_{int16}(A_{\mathrm{unit8}})$

Als Demapping Power wird die zuvor verwendete Mapping Power gewählt: $D_P = M_P$. Für den Demapping Bias $D_B$ liegt es zunächst nahe, den Mapping Bias zu verwenden. Bei genauer Betrachtung der Mapping- und Demappingverluste, die auch als Quantisierungsrauschen Q bezeichnet werden, fällt jedoch auf, dass Q für $D_B = M_B$ nicht mittelwertfrei ist. Dies resultiert bei der Fehlerpropagation zu einem Gain-Effekt, welcher zu größeren Abweichungen zwischen dem Gleitzahl-Modell des neuronalen Netzwerks 100 und der quantisierten Version führt. Um mittelwertfreies Quantisierungsrauschen zu erhalten, wird die Demapping Power daher folgendermaßen gewählt: $D_B = M_B - 2^{M_P-1}$.

## Patentansprüche

1. Computerimplementiertes Verfahren zum Verarbeiten von Daten mittels eines neuronalen Netzwerks (100), wobei das neuronale Netzwerk (100) zwischen einer Inputschicht (103) und einer Outputschicht (104) eine Vielzahl von ersten Schichten (101) aufweist, wobei bevorzugt vorgesehen ist, dass jeder ersten Schicht (101) der Vielzahl von ersten Schichten (101) Filter (105) zugeordnet sind und wobei

   - in jeder ersten Schicht (101) der Vielzahl von ersten Schichten (101) in einem oder mehreren Kanälen aus Eingangsdaten - vorzugsweise unter Verwendung von der jeweiligen ersten Schicht (101) der Vielzahl von ersten Schichten (101) zugeordneten Filtern (105) - durch lineare Rechenoperationen Ergebnisdaten erzeugt werden, wobei die Eingangsdaten eine Eingangsdatengröße pro Kanal aufweisen
   - bevorzugt vorgesehen ist, dass für jede erste Schicht (101) der Vielzahl von ersten Schichten (101) die Größen von rezeptiven Feldern der den ersten Schichten (101) zugeordneten Filter (105) kleiner sind als die Eingangsdatengröße pro Kanal jener ersten Schicht (101) der Vielzahl von ersten Schichten (101), welcher die Filter (105) jeweils zugeordnet sind und die Filter (105) die lineare Rechenoperation jeweils an unterschiedlichen Stellen der Eingangsdaten durchführen

- in zumindest einer ersten Schicht (101) der Vielzahl von ersten Schichten (101) auf die Ergebnisdaten eine nichtlineare Aktivierungsfunktion zur Erzeugung von Ergebnisdaten in Form von Aktivierungsergebnisdaten angewandt wird

**dadurch gekennzeichnet, dass**

- während eines Trainings des neuronalen Netzwerks (100) in der zumindest einen ersten Schicht (101) der Vielzahl von ersten Schichten (101), vorzugsweise in allen ersten Schichten (101) der Vielzahl von ersten Schichten (101), zur Erzeugung der Aktivierungsergebnisdaten eine nichtlineare Aktivierungsfunktion mit einem ersten Bildbereich (B1) verwendet wird

- während eines Inferenzbetriebs des neuronalen Netzwerks (100) in der zumindest einen ersten Schicht (101) der Vielzahl von ersten Schichten (101), vorzugsweise in allen ersten Schichten (101) der Vielzahl von ersten Schichten (101), zur Erzeugung der Aktivierungsergebnisdaten eine nichtlineare Aktivierungsfunktion mit einem zweiten Bildbereich (B2) verwendet wird, wobei der zweite Bildbereich (B2) eine echte Teilmenge des ersten Bildbereichs (B1) bildet.

2. Verfahren nach dem vorangehenden Anspruch, wobei während des Trainings und während des Inferenzbetriebs des neuronalen Netzwerks (100) nichtlineare Aktivierungsfunktionen, vorzugsweise LReLU, verwendet werden, die abgesehen von den unterschiedlichen Bildbereichen (B1, B2) identisch sind.

3. Verfahren nach einem der beiden vorangehenden Ansprüche, beim Training des neuronalen Netzwerks (100) eine Gleitzahl-Arithmetik verwendet wird, welche für den Inferenzbetrieb des neuronalen Netzwerks (100) zu einer Ganzzahl-Arithmetik quantisiert wird.

4. Verfahren nach dem vorangehenden Anspruch, wobei auf die im zweiten Bildbereich (B2) liegenden Ergebnisaktivierungsdaten eine Mapping-Operation angewandt wird, welche die Aktivierungsdaten auf einen vorgegebenen Integer-Datentyp, vorzugsweise uint8, abbildet.

5. Verfahren nach dem vorangehenden Anspruch, wobei eine Demapping-Operation auf die auf den vorgegebenen Datentyp abgebildeten Ergebnisaktivierungsdaten angewandt wird, bevor in einer nachfolgenden ersten Schicht (101) der Vielzahl von ersten Schichten (101) durch lineare Rechenoperationen Ergebnisdaten erzeugt werden.

6. Logikbaustein (1, 200), insbesondere FPGA, in welchem elektronische Schaltungsanordnungen zur Durchführung eines Verfahrens nach einem der Ansprüche 1 bis 5 überschreibbar gespeichert sind.

7. Logikbaustein (1, 200), insbesondere ASIC, in welchem elektronische Schaltungsanordnungen zur Durchführung eines Verfahrens nach einem der Ansprüche 1 bis 5 fest vorgegeben sind.

8. Logikbaustein (1, 200) nach Anspruch 6 oder 7 aufweisend zumindest:

- wenigstens einen Signalinput (203) zum Zuführen von Input für das neuronale Netzwerk (100)
- wenigstens einen Signaloutput (204) zur Abgabe von Output des neuronalen Netzwerks (100)

**dadurch gekennzeichnet, dass** der Logikbaustein (1, 200) weiters aufweist:

- eine Vielzahl von jeweils eine erste Schicht (101) des neuronalen Netzwerks (100) repräsentierenden erste Schicht-Schaltungsanordnungen (201), wobei jede erste Schicht-Schaltungsanordnung (201) wenigstens einen Signaleingang zum Erhalt von Eingangsdaten und wenigstens einen Signalausgang zur Abgabe von Ergebnisdaten aufweist und wobei jede erste Schicht-Schaltungsanordnung (201) wenigstens eine erste Schicht (101) aufweist, in welcher jeweils in einem oder mehreren Kanälen aus eine Eingangsdatengröße pro Kanal aufweisenden Eingangsdaten unter Verwendung einer Anzahl von der wenigstens einen ersten Schicht (101) zugeordneten Filtern (105) durch lineare Rechenoperationen eine Anzahl von Ergebnisdaten erzeugbar ist, wobei die Größen von rezeptiven Feldern der der wenigstens einen ersten Schicht (101) zugeordneten Filter (105) kleiner sind als die Eingangsdatengröße pro Kanal der wenigstens einen ersten Schicht (101), und wobei die Filter (105) die lineare Rechenoperation jeweils pro Kanal an unterschiedlichen Stellen der Eingangsdaten durchführen, wobei alle ersten Schicht-Schaltungsanordnungen (201) dieselbe Anzahl von Filtern (105), welche der wenigstens einen ersten Schicht (101) zugeordnet sind, aufweisen und wobei in jeder der wenigstens einen ersten Schichten (101) jeder ersten Schicht-Schaltungsanordnung (201) jeder der einer jeweiligen ersten Schicht (101) zugeordneten Filter (105) für lineare Rechenoperationen verwendet wird
- eine Output-Schaltungsanordnung, welche mit dem Signaloutput (204) verbunden ist
- wenigstens eine Scheduler-Schaltungsanordnung (205), welche mit der Vielzahl von ersten Schicht-Schaltungsanordnungen (201) in Datenverbindung steht und welche zur Definition einer Netzarchitektur des neuronalen Netzwerks (100) dazu ausgebildet ist, gemäß einer änderbaren Vorgabe festzulegen, in welcher Reihenfolge ein Datenfluss vom Signalinput (203) des Logikbaustein (200) zu den einzelnen ersten Schicht-Schaltungsanordnungen (201), zwischen den einzelnen ersten Schicht-Schaltungsanordnungen (201) und von den einzelnen ersten Schicht-Schaltungsanordnungen (201) zur Output-Schaltungsanordnung erfolgt

9. Logikbaustein nach einem der Ansprüche 6 bis 8, wobei jedem Filter (105) ein Wichtungsfaktor zugeordnet ist, welcher festlegt, in welchem Ausmaß das Ergebnis der durch den jeweiligen Filter (105) an den unterschiedlichen Stellen der Eingangsdaten durchgeführten Rechenoperationen bei der Erzeugung der Ergebnisdaten berücksichtigt wird.

10. Logikbaustein nach einem der Ansprüche 6 bis 9, wobei die den Filtern (105) zugeordneten Wichtungsfaktoren und/oder die Filter (105) in einer RAM-Schaltungsanordnung (206) des Logikbausteins (1, 200) veränderbar abgelegt sind.

11. Logikbaustein nach einem der Ansprüche 6 bis 10, wobei in wenigstens einer ersten Schicht-Schaltungsanordnung (201), vorzugsweise bei einer Vielzahl von ersten Schicht-Schaltungsanordnungen (201) oder in allen ersten Schicht-Schaltungsanordnungen (201), wenigstens einen, vorzugsweise mehrere oder alle Funktionsbaustein(e) ausgewählt aus nachstehender Liste ausgebildet sind:

    - einen Cache-Speicheranordnung (207)
    - einen Bias-Baustein (208) zum Entfernen eines ggf. vorhandenen Bias
    - einen Rektifizier-Baustein (209) zum Durchführen eines Rektifiziervorgangs einen Pooling-Baustein (210) zum Durchführen eines Pooling- und/oder Downsampling-Verfahrens
    - einen Padding-Baustein (211) zur Durchführung eines Padding-Verfahrens

12. Logikbaustein nach einem der Ansprüche 8 bis 11, wobei durch die Scheduler-Schaltungsanordnung (205) eine Netzarchitektur so definiert ist, dass von wenigstens einem Funktionsbaustein einer ersten Schicht-Schaltungsanordnung (201) ein Datenfluss direkt zu wenigstens einem Funktionsbaustein einer anderen ersten Schicht-Schaltungsanordnung (201) erfolgt.

13. Logikbaustein nach einem der Ansprüche 8 bis 12, wobei durch die Scheduler-Schaltungsanordnung (205) eine Netzarchitektur so definiert ist, dass

    - wenigstens zwei erste Schicht-Schaltungsanordnungen (201) rechentechnisch betrachtet sequenziell zwischen der Inputschicht und der Outputschicht angeordnet sind und/oder
    - wenigstens zwei erste Schicht-Schaltungsanordnungen (201) rechentechnisch betrachtet parallel zwischen der Inputschicht und der Outputschicht angeordnet sind

14. Logikbaustein nach einem Ansprüche 6 bis 13, wobei bei wenigstens einer ersten Schicht-Schaltungsanordnung (201) der Vielzahl von ersten Schicht-Schaltungsanordnungen (201), vorzugsweise bei einer Vielzahl von ersten Schicht-Schaltungsanordnungen (201) oder in allen ersten Schicht-Schaltungsanordnungen (201), die durch an unterschiedlichen Stellen der Eingangsdaten durchgeführten linearen Rechenoperationen innere Produkte sind und die Ergebnisdaten das Ergebnis von Faltungen sind.

15. Logikbaustein nach einem der Ansprüche 6 bis 14, wobei im Logikbaustein (1, 200) zumindest zwei zweite Schicht-Schaltungsanordnungen (202) fest vorgegeben sind, die dicht miteinander verbundene zweite Schichten (102) repräsentieren, wobei entweder rechentechnisch betrachtet sequenziell hinter den zumindest zwei zweiten Schichten (102) die Outputschicht angeordnet ist oder die rechentechnisch betrachtet sequenziell als letztes angeordnete zweite Schicht (102) als Outputschicht ausgebildet ist.

16. Vorrichtung mit wenigstens einem Logikbaustein (1, 200) nach einem der Ansprüchen 6 bis 15, wobei dem wenigstens einen Logikbaustein (1, 200) über zumindest einen Signalinput (203) durch zumindest eine an oder in der Vorrichtung (6) angeordnete Signalerzeugungsvorrichtung (9) Signale als Input für die neuronalen Netzwerkberechnungen zuführbar sind und wobei der wenigstens eine Logikbaustein (1, 200) über zumindest einen Signaloutput (204) zur Kommunikation mit einer Steuer- oder Regelvorrichtung (2) der Vorrichtung oder zur direkten Abgabe von Steuerbefehlen an wenigstens einen Aktor (10) der Vorrichtung aufweist.

← 105

**Figur 1a**

$$\begin{pmatrix} -1 & 0 & 1 \\ -1 & 0 & 1 \\ -1 & 0 & 1 \end{pmatrix}$$

105

**Figur 1b**

Figur 2

EP 4 318 317 A2

Figur 3

**Figur 4**

**Figur 5**

**Figur 6**

EP 4 318 317 A2

**Figur 7**

Figur 8

EP 4 318 317 A2

**Figur 9**

EP 4 318 317 A2

**Figur 10**

**Figur 11**

**Figur 12**

EP 4 318 317 A2

visualization of activation clipper
$$L = -2, U = 7$$

Figur 13

**Figur 14a**

**Figur 14b**

EP 4 318 317 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018112795 A
- EP 3480746 A
- WO 2019074804 A1
- US 201900887725 A
- US 20190080507 A
- WO 2018106805 A1
- WO 2017152990 A
- US 6389408 B
- EP 0566015 A2
- EP 1039415 A
- US 20180137414 A
- US 20180137417 A

**In der Beschreibung aufgeführte Nicht-Patentliteratur**

- **CHARU C. AGGARWAL.** Neural Networks and Deep Learning. Springer International Publishing, 2018, 335ff